# EUROPEAN PATENT APPLICATION

(11) **EP 4 618 013 A2**
(43) Date of publication of application: **17.09.2025**
(21) Application number: 23903785.6
(22) Date of filing: 16.11.2023
(51) Int. Cl.: G06T 7/11, G06T 7/13, G06T 3/40, G06T 7/60, G06N 3/08, G06T 7/136, G06T 5/00

(54) **IMAGE PROCESSING DEVICE AND OPERATION METHOD THEREOF**

(30) Priority: 15.12.2022 KR 20220175984; 15.12.2022 KR 20220175985; 15.12.2022 KR 20220175986
(71) Applicant: LG CHEM, LTD., Seoul 07336 (KR)
(72) Inventor: KIM, Yern Seung, Daejeon 34122 (KR); KWAK, Ick Soon, Daejeon 34122 (KR); KIM, Sang Hun, Daejeon 34122 (KR); MOON, Chang Jun, Daejeon 34122 (KR); PARK, Hyun Ah, Daejeon 34122 (KR); LEE, Ji Young, Daejeon 34122 (KR); JANG, Jae Wun, Daejeon 34122 (KR); JEON, Hye Ji, Daejeon 34122 (KR); JUNG, Won Sig, Daejeon 34122 (KR); CHOE, Gwang Seok, Daejeon 34122 (KR); HWANG, Byung Hyun, Daejeon 34122 (KR)
(74) Representative: Hoffmann Eitle
(86) International application number: PCT/KR2023/018485
(87) International publication number: WO 2024/128582

(57) **Abstract**

An image processing apparatus according to an embodiment disclosed in this document may include an image acquisition unit configured to acquire an active material image of a plurality of active materials, an artificial intelligence model training unit configured to train an artificial intelligence model using training data including a plurality of reference active material images and a plurality of reference binary images or a plurality of reference edge images corresponding to the plurality of reference active material images, an image generation unit configured to generate a binary image or an edge image by inputting the active material image to the artificial intelligence model, an object identification unit configured to identify a plurality of objects based on the binary image or the edge image, and an image segmentation unit configured to acquire a segmentation image by segmenting the plurality of active materials included in the active material image based on the plurality of objects.

## Description

### [TECHNICAL FIELD]

### CROSS-REFERENCE TO RELATED APPLICATION

This application claims priority to and the benefit of Korean Patent Application Nos. 10-2022-0175984, 10-2022-0175985, and 10-2022-0175986 filed in the Korean Intellectual Property Office on December 15, 2022, the entire contents of which are incorporated herein by reference.

### TECHNICAL FIELD

Embodiments disclosed in this document relate to an image processing apparatus and method.

### [BACKGROUND ART]

The demand for lithium-ion batteries as an energy source is rapidly increasing with the development of technology and the growing demand for mobile devices and electric vehicles.

Lithium-ion batteries are manufactured by placing an electrode assembly consisting of a positive electrode, a separator, and a negative electrode in a battery case and injecting electrolyte. The positive electrode is manufactured by coating a composition for forming a positive electrode active material layer, which contains a positive electrode active material, conductive agent, and binder, onto an positive electrode current collector, drying, and rolling; the negative electrode is manufactured by coating a composition for forming a negative electrode active material layer, which contains a negative electrode active material, conductive agent, and binder onto a negative electrode current collector, drying, and rolling.

Meanwhile, the electrochemical performance of lithium-ion batteries is affected not only by the composition of the positive electrode and negative electrode active materials used, but also by the shape of the active material particles. This is because the electrochemical properties, such as electrode density, electrical conductivity, and resistance characteristics, can vary depending on the shape or size of the active material particles. Therefore, in order to manufacture lithium-ion batteries with the desired performance, it is necessary to accurately analyze the shape of the active material particles.

Conventionally, the shape of the positive electrode active material particles was analyzed using images of the positive electrode active material particles obtained through a scanning electron microscope (SEM). However, in the conventional method of analyzing the shape of the positive electrode active material using SEM images, qualitative analysis is possible, but for quantitative analysis, a person must manually measure individual active material particles by selecting them from the SEM image, and automatic quantitative analysis cannot be performed. Therefore, it is difficult to perform quantitative analysis of a large number of positive electrode active material particles, and the accuracy of the analysis may be low due to the possibility of measurement values varying depending on the person conducting the measurement.

### [DISCLOSURE]

### [TECHNICAL PROBLEM]

The present invention has been conceived to solve the above problems and it is an object of the present invention to provide a method for automated quantitative analysis of the shape characteristics of a large amount of positive electrode active material and/or precursor particles.

It is another object of the present invention to provide a quantitative analysis method that minimizes user involvement, mitigating the problem of analysis accuracy degradation arising from variations in measurements depending on the user.

### [TECHNICAL SOLUTION]

An image processing apparatus according to an embodiment disclosed in this document may include an image acquisition unit configured to acquire an active material image of a plurality of active materials, an artificial intelligence model training unit configured to train an artificial intelligence model using training data including a plurality of reference active material images and a plurality of reference binary images or a plurality of reference edge images corresponding to the plurality of reference active material images, an image generation unit configured to generate a binary image or an edge image by inputting the active material image to the artificial intelligence model, an object identification unit configured to identify a plurality of objects based on the binary image or the edge image, and an image segmentation unit configured to acquire a segmentation image by segmenting the plurality of active materials included in the active material image based on the plurality of objects.

In an embodiment, the artificial intelligence model training unit may train the artificial intelligence model to ensure the difference between a plurality of output images acquired by inputting the plurality of reference active material images to the artificial intelligence model and the plurality of reference binary images is equal to or less than a predetermined reference value.

In an embodiment, the plurality of reference active material images may include one or more first reference active material images and one or more second reference active material images, the plurality of reference binary images may include one or more first reference binary images and one or more second reference binary images, the first reference active material images being acquired by capturing images of active material powder, the second reference active material images being generated by applying a predetermined image processing algorithm to the first reference active material images, the first reference binary images corresponding to the first reference active material images, and the second reference binary images corresponding to the second reference active material images.

In an embodiment, the artificial intelligence model may include a plurality of layers of which at least one layer included in an encoding area and at least one layer included in a decoding area are connected through a skip connection.

In an embodiment, the layers included in the decoding area among the plurality of layers may have a structure in which a 2-dimensional (2D) convolution layer, a batch normalization layer, an activation layer, and an up-sampling layer are sequentially connected.

In an embodiment, the layers included in the encoding area among the plurality of layers may have a structure in which a 2-dimensional (2D) convolution layer, a batch normalization layer, an activation layer, and a max pooling layer are sequentially connected.

In an embodiment, the active material image may be an image based on scanning electron microscope (SEM), transmission electron microscope (TEM), optical microscope (OM), structured illumination microscopy (SIM), or focused ion beam (FIB).

In an embodiment, the image segmentation unit may segment the plurality of active materials included in the active material image based on a watershed algorithm.

In an embodiment, the image processing apparatus may further include an information extraction unit configured to extract information on the plurality of active materials based on the segmentation image, wherein the information on the plurality of active materials may include particle diameter, perimeter length, sphericity, aspect ratio, convexity, solidity, distribution, percentile value of the active materials, or any combination thereof.

In an embodiment, the image processing apparatus may further include an edge removal unit configured to generating an edge-removed image by removing edges in the active material image based on the edge image, wherein the object identification unit may identify the plurality of objects included in the edge-removed image.

In an embodiment, the artificial intelligence model training unit may train the artificial intelligence model to ensure the difference between a plurality of output images acquired by inputting the plurality of reference active material images to the artificial intelligence model and the plurality of reference edge images is equal to or less than a predetermined reference value.

In an embodiment, the artificial intelligence model training unit may calculate the difference between the plurality of output images and the plurality of reference edge images based on the mean absolute error function, root mean square error, mean squared error function, or binary cross-entropy loss function.

In an embodiment, the binary cross-entropy loss function may be assigned a weight for a predetermined color.

In an embodiment the image processing apparatus may further include a distance transformation unit configured to transform the binary image into a distance transformation image based on a distance transformation algorithm, and a binary image filtering unit configured to filter the binary image using a threshold set based on the distance transformation image, wherein the object identification unit may identify the plurality objects included in the filtered binary image.

In an embodiment, the distance transformation unit may generate the distance transformation image by calculating the distance from each included to the nearest black pixel in the binary image and normalize the calculated distance for each pixel.

In an embodiment, the distance transformation unit may generate the distance transformation image by identifying the maximum distance among the distances calculated for each pixel included in the binary image and performing max-min normalization on the distances calculated for each pixel based on the maximum distance.

In an embodiment, the binary image filtering unit may filter the binary image by selecting pixels with distance values equal to or less than a predetermined threshold among the pixels included in the distance transformation image and setting the color values of the pixels corresponding to the selected pixels among the pixels included in the binary image to a predetermined color value.

In an embodiment, the predetermined threshold may be a value obtained by multiplying a predetermined ratio to the normalized maximum distance of the distance transformation image.

### [ADVANTAGEOUS EFFECTS]

Accordance to various embodiments disclosed in this document, an image processing apparatus and method are advantageous in terms of enabling quantitative analysis of the shape characteristics of a large number of positive electrode active material particles by acquiring an active material image of a plurality of active materials, generating a binary image by inputting the active material image into an artificial intelligence model, identifying a plurality of objects included in the binary image, and performing segmentation of the plurality of active materials within the active material image based on the identified objects.

Accordance to various embodiments disclosed in this document, an image processing apparatus and method are advantageous in terms of enabling quantitative analysis of the shape characteristics of a large number of positive electrode active material particles by acquiring an active material image of a plurality of active materials, generating an edge image by inputting the active material image into an artificial intelligence model, generating a edge-removed image by removing boundaries from the active material image based on the edge image, identifying a plurality of objects included in the edge-removed image, and performing segmentation of the plurality of active materials within the active material image.

Accordance to various embodiments disclosed in this document, an image processing apparatus and method are advantageous in terms of enabling quantitative analysis of the shape characteristics of a large number of positive electrode active material particles by acquiring an active material image of a plurality of active materials, generating a binary image by inputting the active material image into an artificial intelligence model, converting the binary image to a distance-transformed image based on a distance transform algorithm, filtering the binary image using a threshold set based on the distance-transformed image, identifying a plurality of objects included in the filtered binary image, and performing segmentation of the plurality of active material objects included in the active material image based on the plurality of objects.

Accordance to various embodiments disclosed in this document, an image processing apparatus and method are also advantageous in terms of mitigating the problem of analysis accuracy degradation arising from variations in measurements depending on the user by minimizing user involvement.

The advantage effects of the image processing apparatus and method disclosed in this document are not limited to the aforesaid, and other effects not described herein with can be clearly understood by those skilled in the art from the descriptions below.

### [DESCRIPTION OF DRAWINGS]

FIG. 1 is a block diagram illustrating an image processing apparatus according to an embodiment of the present disclosure;
FIG. 2 illustrates training data according to an embodiment of the present disclosure;
FIG. 3 illustrates an artificial intelligence model according to an embodiment of the present disclosure;
FIG. 4 illustrates images resulting from image processing of an image processing apparatus according to an embodiment of the present disclosure;
FIG. 5 is a flowchart illustrating a method for processing active material images in an image processing apparatus according to an embodiment of the present disclosure;
FIG. 6 is a flowchart illustrating a method for training an artificial intelligence model in an image processing apparatus according to an embodiment of the present disclosure;
FIG. 7 is a block diagram illustrating an image processing apparatus according to another embodiment of the present disclosure;
FIG. 8 illustrates training data according to another embodiment of the present disclosure;
FIG. 9 illustrates an artificial intelligence model according to another embodiment of the present disclosure;
FIG. 10A illustrates images resulting from image processing of an image processing apparatus according to another embodiment of the present disclosure;
FIG. 10B illustrates differences in images resulting from image processing of an image processing apparatus according to another embodiment of the present disclosure;
FIG. 11 is a flowchart illustrating a method for processing active material images in an image processing apparatus according to another embodiment of the present disclosure;
FIG. 12 is a flowchart illustrating a method for training an artificial intelligence model in an image processing apparatus according to another embodiment of the present disclosure;
FIG. 13 is a block diagram illustrating an image processing apparatus according to still another embodiment of the present disclosure;
FIG. 14 illustrates training data according to still another embodiment of the present disclosure;
FIG. 15 illustrates an artificial intelligence model according to still another embodiment of the present disclosure;
FIG. 16A illustrates images resulting from image processing of an image processing apparatus according to still another embodiment of the present disclosure;
FIG. 16B illustrates differences in images resulting from image processing of an image processing apparatus according to yet another embodiment of the present disclosure; and
FIG. 17 is a flowchart illustrating a method for processing active material images in an image processing apparatus according to still another embodiment of the present disclosure.

With regard to the explanation of the drawings, the same or similar reference numerals may be used for identical or similar components.

### [MODE FOR INVENTION]

Hereinafter, embodiments of the present invention are described with reference to accompanying drawings. However, the description is not intended to limit the present invention to particular embodiments, and it should be construed as including various modifications, equivalents, and/or alternatives of the embodiments described herein.

The embodiments and terms used in this document are not intended to limit the technical features disclosed in this document to specific embodiments, and should be understood to encompass various modifications, equivalents, or alternatives to the disclosed embodiments. In connection with the description of the drawings, like reference numbers may be used for like or related elements. The singular form of a noun corresponding to an item may include one item or a plurality of items unless the relevant context clearly dictates otherwise.

In this document, each of the phrases such as "A or B", "at least one of A and B", "at least one of A or B", "A, B or C", "at least one of A, B and C", and "at least one of A, B, or C" may include any of the items listed together in the corresponding phrase or any possible combination thereof. Terms such as "the first", "the second", "first", "second", "A", "B", "(a)", or "(b)" may be used simply to distinguish such components from other components and do not limit the corresponding components in other aspects (such as importance or order), unless otherwise stated specifically.

In this document, when it is mentioned that a (e.g., first) component is "connected", "coupled", "accessed", with or without the terms "functionally" or "communicatively", to another (e.g., second) component, it means that the component can be connected to the other component directly (e.g., wired or wirelessly) or indirectly (e.g., through a third component).

The methods according to various embodiments disclosed in this document can be included and provided in a computer program product. The computer program product may be traded between sellers and buyers as commodities. A computer program product can be distributed in the form of a device-readable storage medium (e.g., compact disc read-only memory, CD-ROM), or it can be distributed directly, online, between two user devices, or through an application store (e.g., download or upload). In the case of online distribution, at least part of the computer program product may be temporarily stored or temporarily created in a device-readable storage medium such as a manufacturer's server, an application store server, or a relay server's memory.

According to the embodiments disclosed in this document, each of the described components (e.g., modules or programs) may include one or more entities, and some of the plurality of entities may be separately arranged in other components. According to the embodiments disclosed in this document, one or more components or operations may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by the corresponding component of the plurality of components prior to the integration. According to the embodiments disclosed in this document, operations performed by modules, programs, or other components are executed sequentially, in parallel, iteratively, or heuristically, or one or more of the operations are executed in a different order, omitted, or one or more other operations may be added.

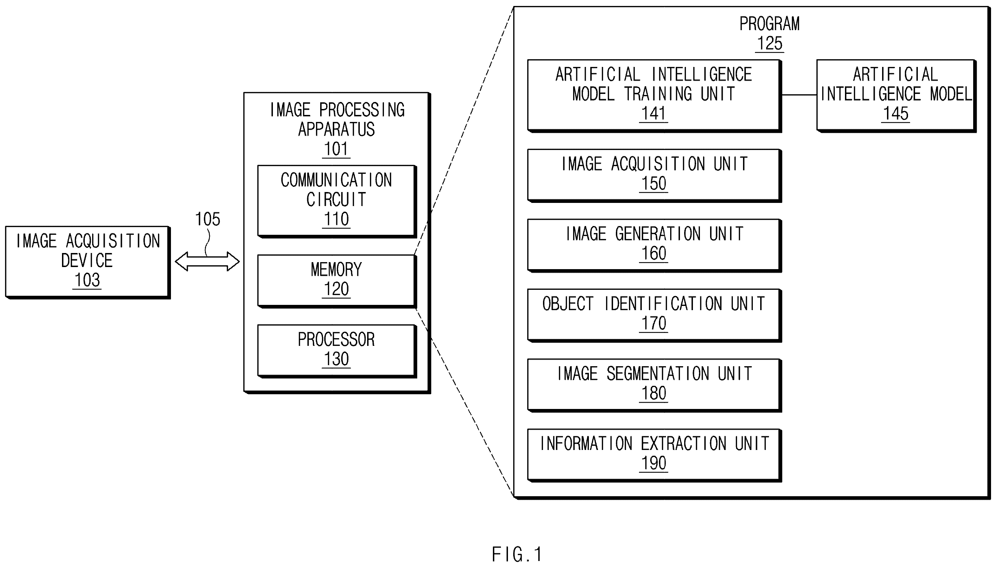

FIG. 1 is a block diagram illustrating an image processing apparatus 101 according to an embodiment of the present disclosure.

With reference to FIG. 1, the image processing apparatus 101 may be connected to an image acquisition device 103 through wired and/or wireless connections.

According to an embodiment, the connection 105 between the image processing apparatus 101 and the image acquisition device 103 may be a communication link established through wired and/or wireless networks. In an embodiment, the wired network may be based on local area network (LAN) or power line communication. In an embodiment, the wireless network may be based on a short range communication network (e.g., Bluetooth, wireless fidelity (Wi-Fi), infrared data association (IrDA)) or a long-range communication network (e.g., cellular network encompassing 4^{th} Generation (4G) and 5G network networks).

According to another embodiment, the connection 105 between the image processing apparatus 101 and the image acquisition device 103 may be a connection established through an inter-device communication interface (e.g., bus, general purpose input and output (GPIO), serial peripheral interface (SPI), or mobile industry processor interface (MIPI)).

In an embodiment, the image acquisition device 103 may be a microscope (e.g., a scanning electron microscope). In an embodiment, the image acquisition device 103 may be a device that scans a focused electron beam onto the sample surface, converting secondary electrons generated by the interaction between the electron beam and the sample into image signals to acquire an image of the sample surface.

In an embodiment, the image acquisition device 103 may acquire images of the active material and/or precursor. In the following, images of the active material and/or precursor may be referred to as active material images. However, referring to the images as active material images does not exclude images of the precursor.

In an embodiment, the image acquisition device 103 may acquire active images of the active material. For example, the image acquisition device 103 may scan an electron beam onto the positive electrode or negative electrode active material powder to acquire SEM images. That is, the SEM images may include images of both positive electrode and negative electrode active materials. Depending on the embodiments, SEM images may be replaced with images based on transmission electron microscope (TEM), optical microscope (OM), structured illumination microscopy (SIM), or focused ion beam (FIB).

In an embodiment, the image acquisition device 103 may transmit the active material image of the active materials to the image processing apparatus 101. For example, the image acquisition device 103 may transmit the active material image of the active materials to the image processing apparatus 101 through the connection 105.

In an embodiment, the image processing apparatus 101 may be a mobile device (e.g., phone, laptop computer, smartphone, and smart pad) or a computer (e.g., general-purpose computer, special-purpose computer).

With reference to FIG. 1, the image processing apparatus 101 may include a communication circuit 110, a memory 120, and a processor 130. According to an embodiment, the image processing apparatus 101 shown in FIG. 1 may further include at least one additional component (e.g., a display, input device, or output device) other than the components illustrated in FIG. 1.

According to an embodiment, the communication circuit 110 may establish a wired and/or wireless communication channel between the image processing apparatus 101 and an image acquisition device 103 and exchange data with the image acquisition device 103 through the established communication channel.

In an embodiment, the memory 120 may include volatile memory and/or nonvolatile memory.

In an embodiment, the memory 120 may store data used by at least one component of the image processing apparatus 101 (e.g., processor 130). For example, the data may include the program 125 (or instructions related thereto), input data, or output data. In an embodiment, the instructions may be executed by the processor 130 for the image processing apparatus 101 to perform operations defined by the instructions.

In an embodiment, the memory 120 may include programs 125 (e.g., artificial intelligence model training unit 141, artificial intelligence model 145, image acquisition unit 150, image generation unit 160, object identification unit 170, image segmentation unit 180, and/or information extraction unit 190).

In an embodiment, the processor 130 may include a central processing unit, an application processor, a graphic processing unit, a neural processing unit (NPU), an image signal processor, a sensor hub processor, or a communication processor.

In an embodiment, the processor 130 may execute the program 125 (e.g., artificial intelligence model training unit 141, artificial intelligence model 145, image acquisition unit 150, image generation unit 160, object identification unit 170, image segmentation unit 180, and/or information extraction unit 190) to control at least one other component (e.g., hardware or software component) connected to the processor 130 in the image processing apparatus 101 and perform various data processing or operations.

In an embodiment, the artificial intelligence model training unit 141 may train an artificial intelligence model 145 based on training data. In an embodiment, the artificial intelligence model 145 may be a model trained to convert active material images into binary images. In an embodiment, the image acquisition unit 150 may acquire the active material image of the active materials from the image acquisition device 103. In an embodiment, the image generation unit 160 may generate binary images by inputting active material images into the artificial intelligence model 145. In an embodiment, the object identification unit 170 may identify a plurality of objects included in the binary images. In an embodiment, the image segmentation unit 180 may acquire segmentation images by performing segmentation of the plurality of active material objects included in the active material images based on the identified objects. In an embodiment, the information extraction unit 190 may extract information about the active material based on the active material objects included in the segmentation image.

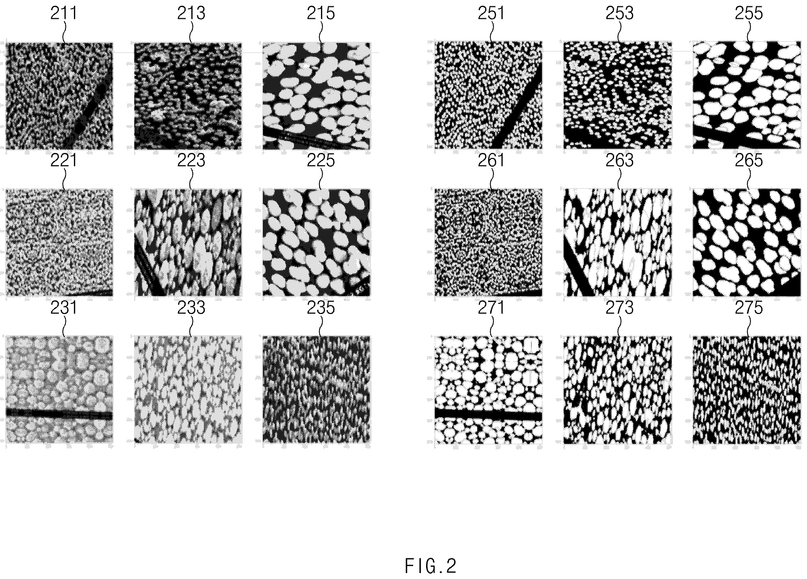

Hereinafter, a description is made of the method for the image processing apparatus 101 to process images acquired from the image acquisition device 103 via the artificial intelligence model training unit 141, artificial intelligence model 145, image acquisition unit 150, image generation unit 160, object identification unit 170, image segmentation unit 180, and/or information extraction unit 190, with reference to FIGS. 2 to 4.

### Training data

FIG. 2 illustrates training data according to an embodiment of the present disclosure.

With reference to FIG. 2, the training data may include reference active material images 211, 213, 215, 221, 223, 225, 231, 233, and 235 and reference binary images 251, 253, 255, 261, 263, 265, 271, 273, and 275.

The sizes of the reference active material images 211, 213, 215, 221, 223, 225, 231, 233, and 235 and reference binary images 251, 253, 255, 261, 263, 265, 271, 273, and 275 included in the training data may be the same. In an embodiment, the size of an image may be defined as the number of horizontal pixels × the number of vertical pixels. In the training data, the number of horizontal pixels may be an integer between 32 and 4096, and the number of vertical pixels may be an integer between 32 and 4096. For example, the size of an image may be 256 × 256.

In an embodiment, the plurality of reference active material images 211, 213, 215, 221, 223, 225, 231, 233, and 235 may include one or more first reference active material images and one or more second reference active material images.

In an embodiment, the first reference active material images may be obtained by capturing images of the active material powder. In an embodiment, the first reference active material images may be SEM images directly obtained through the image acquisition device 103.

In an embodiment, the second reference active material images may be images derived or modified from the first reference active material images. In an embodiment, the second reference active material images may be generated by applying a predetermined first image processing algorithm to the first reference active material images. Here, the first image processing algorithm may include rotation, tilt, shear, brightness adjustment, contrast adjustment, enlargement, reduction, or combinations thereof.

In an embodiment, the plurality of reference binary images 251, 253, 255, 261, 263, 265, 271, 273, and 275 may include one or more first reference binary images and one or more second reference binary images.

In an embodiment, the first reference binary images may be generated by applying a second image processing algorithm to the first reference active material images. Here, the second image processing algorithm may include a mean shift filter, an edge detection algorithm, an edge removal algorithm, a binarization algorithm, or any combination thereof.

In an embodiment, the second reference binary images may be images derived or modified from the first reference active material images. In an embodiment, the second reference binary images may be generated by applying a predetermined first image processing algorithm to the first reference binary images. Here, the first image processing algorithm may include rotation, tilt, shear, brightness adjustment, contrast adjustment, enlargement, reduction, or any combination thereof.

In an embodiment, the first reference binary images may be binary images of the first reference active material images, and the second reference binary images may be binary images of the second reference active material images. For example, the reference binary image 251 may be a binary image of the reference active material image 211, the reference binary image 263 may be a binary image of the reference active material image 223, and the reference binary image 275 may be a binary image of the reference active material image 265. Accordingly, the plurality of reference active material images 211, 213, 215, 221, 223, 225, 231, 233, and 235 and the plurality of reference binary images 251, 253, 255, 261, 263, 265, 271, 273, and 275 may be classified into image sets of corresponding images. For example, the reference active material image 211 and the reference binary image 251 may be classified into one image set.

In an embodiment, the training data may be used to train the artificial intelligence model 145. In an embodiment, the training data may be used to train the artificial intelligence model 145 for a predetermined number of epochs. Here, the predetermined number may be determined between 100 and 10000. For example, the predetermined number can be 3000.

In an embodiment, the training data may be divided into mini-batches of a predetermined batch size. Here, the batch size can be determined between 1 and 512. For example, the batch size may be 3. When the batch size is 3, each mini-batch may be composed of 3 image sets (i.e., 3 reference active material images and 3 reference binary images). For example, the reference active material images 211, 213, and 215 and the reference binary images 251, 253, and 255 may form the first mini-batch, the reference active material images 221, 223, and 225 and the reference binary images 261, 263, and 265 may form the second mini-batch, and the reference active material images 231, 233, and 235 and the reference binary images 271, 273, and 275 may form the third mini-batch.

### Artificial intelligence model

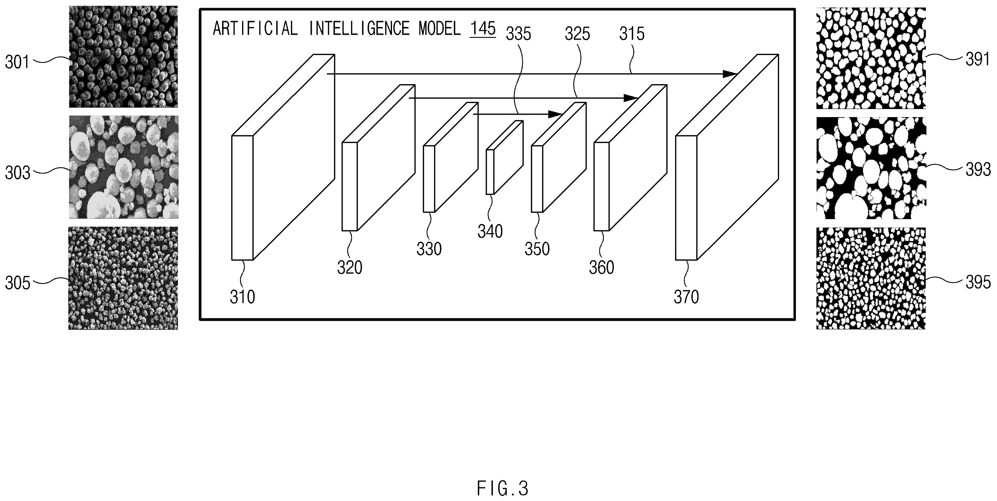

FIG. 3 illustrates an artificial intelligence model 145 according to an embodiment of the present disclosure. Specifically, FIG. 3 shows an example of training the artificial intelligence model 145 through a mini-batch consisting of reference active material images 301, 303, and 305 and reference binary images 391, 393, and 395.

In an embodiment, the artificial intelligence model 145 may be a model based on convolutional neural network (CNN) or U-Net. In an embodiment, the artificial intelligence model 145 may be a model trained to convert active material images into binary images.

With reference to FIG. 3, the artificial intelligence model 145 may include a plurality of layers 310, 320, 330, 340, 350, 360, and 370. The plurality of layers 310, 320, 330, 340, 350, 360, and 370 may be connected sequentially. The input of a sequentially connected layer is the output of the layer before it, and the output of a sequentially connected layer can be the input of the layer after it. For example, the output of layer 310 may be the input of layer 320.

At least two layers (e.g., layers 310 and 370, layers 320 and 360, or layers 330 and 350) among the plurality of layers 310, 320, 330, 340, 350, 360, and 370 may be connected through skip connections 315, 325, and 335. In an embodiment, skip connections 315, 325, and 335 may connect layers included in the encoding area (e.g., layers 310, 320, and 330) with layers included in the decoding area (e.g., layers 350, 360, and 370) among the plurality of layers 310, 320, 330, 340, 350, 360, and 370. Here, the skip connections 315, 325, and 335 may be interlayer connections for inputting the output of the layers 310, 320, and 330 to the layers 350, 360, and 370. For example, through the skip connection 335, the layer 350 may receive the output of the layer 340 and the output of the layer 330 as inputs.

In an embodiment, the plurality of layers 310, 320, 330, 340, 350, 360, and 370 may include an input layer, a batch normalization layer, a 2D convolution layer, an activation layer, a max pooling layer, an up-sampling layer, a concatenate layer, or any combination thereof. In an embodiment, the layers included in the encoding area (e.g., layers 310, 320, and 330) may have a structure in which a 2D convolution layer, a batch normalization layer, an activation layer, and a max pooling layer are sequentially connected. Similarly, the layers included in the decoding area (e.g., layers 350, 360, and 370) may have a structure where a 2D convolution layer, a batch normalization layer, an activation layer, and an up-sampling layer are sequentially connected.

In an embodiment, the input layer may be a layer that receives the bit values included in the reference active material images 301, 303, and 305. In an embodiment, the input layer may acquire input consisting of bit values corresponding to the number of horizontal pixels × the number of vertical pixels × the number of channels (or depth). For example, when the reference active material image has a size of N × N, the input layer may receive N × N × 1 bit values. Here, N may be an integer between 32 and 4096 (e.g., 256). Depending on the embodiments, the number of channels may also be referred to as depth.

In an embodiment, the batch normalization layer may be a layer to normalize the output values of the previous layer on a batch basis. Depending on the embodiments, the batch normalization layer may be placed just before the activation layer. Here, a batch may include reference active material images input to the artificial intelligence model 145 during one iteration to train the model. For example, when the batch size is 3, the number of reference active material images input to the artificial intelligence model 145 during one iteration may be 3. Here, the batch size may be an integer between 1 and 512 (e.g., 3).

In an embodiment, the 2D convolution layer may be a layer performing a convolution operation on an input and a filter of a predetermined size to obtain output. In an embodiment, the 2D convolution layer included in the artificial intelligence model 145 assumes that the output image size (number of horizontal pixels × number of vertical pixels) is the same as the input image size (number of horizontal pixels × number of vertical pixels). In an embodiment, the number of channels in the output may vary depending on the number of filters (or depth) in the 2D convolution layer. For example, when the number of filters is 2, the number of channels in the output may increase by twice compared to the number of channels in the input. In an embodiment, the number of channels in the output may vary depending on the stride in the depth direction of the 2D convolution layer. For example, when the stride in the depth direction is 2, the number of channels in the output may decrease by half compared to the number of channels in the input.

In an embodiment, the activation layer may be a layer applying a predetermined activation function to the input to obtain the output. For example, the predetermined activation function may include step, sigmoid, rectifier linear unit (ReLU), exponential linear unit (ELU), softmax, or any combination thereof.

In an embodiment, the max pooling layer may be a layer selecting the maximum value in each pooling region of the input to obtain the output. In an embodiment, the size of the pooling region in the max pooling layer may affect the image size of the output (i.e., the number of horizontal pixels and vertical pixels). For example, when the pooling region size is 2 × 2, the output image size (e.g., 128 × 128) may be reduced by half compared to the input image size (e.g., 256 × 256). Depending on the embodiments, the artificial intelligence model 145 may include a pooling layer other than max pooling layer. For example, another type of pooling layer may include an average pooling layer.

In an embodiment, the up-sampling layer may be a layer used to increase the resolution of an image. In an embodiment, the up-sampling layer may be a layer increasing the image size of the output compared to the input using a predetermined interpolation algorithm.

In an embodiment, the concatenate layer may concatenate two or more inputs to produce the output. Here, concatenation may be a depth-wise connection. For example, when the first input is 128 × 128 × 128 and the second input is 128 × 128 × 128, the output of the concatenate layer may be 128 × 128 × 256. When the first input is 256 × 256 × 64 and the second input is 128 × 128 × 128, the output of the concatenate layer may be 256 × 256 × 128.

Although FIG. 3 depicts 7 layers 310, 320, 330, 340, 350, 360, and 370 are 7, this is merely an illustrative example, and the number of layers is not limited to 7. For example, the number of layers included in the artificial intelligence model 145 may be 32.

When the number of layers included in the artificial intelligence model 145 is 32, the artificial intelligence model 145 may have a structure in which the input layer, first batch normalization layer, first 2D convolutional layer, and second 2D convolutional layer are connected sequentially. The input of a sequentially connected layer is the output of the layer before it, and the output of a sequentially connected layer can be the input of the layer after it. Here, the input of the input layer may be 256 × 256 × 1, and the output may be 256 × 256 × 1. The output of the first batch normalization layer may be 256 × 256 × 1. The output of the first 2D convolution layer may be 256 × 256 × 64. The output of the second 2D convolution layer may be 256 × 256 × 64.

Following the second 2D convolution layer, the artificial intelligence model 145 may have a structure in which the second batch normalization layer, the first activation layer, and the first max pooling layer are connected sequentially. Here, the output of the second batch normalization layer may be 256 × 256 × 64. The output of the first activation layer may be 256 × 256 × 64. The output of the first max pooling layer may be 128 × 128 × 64.

Following the first max pooling layer, the artificial intelligence model 145 may have a structure in which the third 2D convolution layer, the fourth 2D convolution layer, the third batch normalization layer, the second activation layer, and the second max pooling layer are connected sequentially. Here, the output of the third 2D convolution layer may be 128 × 128 × 128. The output of the fourth 2D convolution layer may be 128 × 128 × 128. The output of the third batch normalization layer may be 128 × 128 × 128. The output of the second activation layer may be 128 × 128 × 128. The output of the second max pooling layer may be 64 × 64 × 128.

Following the second max pooling layer, the artificial intelligence model 145 may have a structure in which the fifth 2D convolution layer, the sixth 2D convolution layer, the fourth batch normalization layer, the third activation layer, and the first up-sampling layer are connected sequentially. Here, the output of the fifth 2D convolution layer may be 64 × 64× 256. The output of the sixth 2D convolution layer may be 64 × 64 × 256. The output of the fourth batch normalization layer may be 64 × 64 × 256. The output of the third activation layer may be 64 × 64 × 256. The output of the first up-sampling layer may be 128 × 128 × 256.

Following the first up-sampling layer, the artificial intelligence model 145 may have a structure in which the seventh 2D convolution layer, the first concatenation layer, the eighth 2D convolution layer, the ninth 2D convolution layer, the fifth batch normalization layer, the fourth activation layer, and the second up-sampling layer are connected sequentially. Of the two inputs to the first concatenation layer, the first input may be the output of the seventh 2D convolution layer, and the second input may be the output of the fourth 2D convolution layer. Here, the output of the seventh 2D convolution layer may be 128 × 128 × 128. The output of the first concatenate layer may be 128 × 128 × 256. The output of the eighth 2D convolution layer may be 128 × 128 × 128. The output of the ninth 2D convolution layer may be 128 × 128 × 128. The output of the fifth batch normalization layer may be 128 × 128 × 128. The output of the fourth activation layer may be 128 × 128 × 128. The output of the second up-sampling layer may be 256 × 256 × 128.

Following the second up-sampling layer, the artificial intelligence model 145 may have a structure in which the tenth 2D convolution layer, the second concatenation layer, the eleventh 2D convolution layer, the twelfth 2D convolution layer, the sixth batch normalization layer, the fifth activation layer, the thirteenth 2D convolution layer, and the fourteenth 2D convolution layer are connected sequentially. Of the two inputs to the second concatenate layer, the first input may be the output of the tenth 2D convolution layer, and the second input may be the output of the second 2D convolution layer. Here, the output of the tenth 2D convolution layer may be 256 × 256 × 64. The output of the second concatenate layer may be 256 × 256 × 128. The output of the eleventh 2D convolution layer may be 256 × 256 × 64. The output of the twelfth 2D convolution layer may be 256 × 256 × 64. The output of the sixth batch normalization layer may be 256 × 256 × 64. The output of the fifth activation layer may be 256 × 256 × 64. The output of the thirteenth 2D convolution layer may be 256 × 256 × 2. The output of the fourteenth 2D convolution layer may be 256 × 256 × 2.

### Artificial Intelligence Model Learning

A description is made of the operation of the artificial intelligence model training unit 141 for training the artificial intelligence model 145 through the images 301, 303, 305, 391, 393, and 395 included in a mini-batch, with reference to FIG. 3.

In an embodiment, the artificial intelligence model training unit 141 may sequentially input reference active material images 301, 303, and 305 to the artificial intelligence model 145.

In an embodiment, the artificial intelligence model training unit 141 may train the artificial intelligence model 145 to ensure that the difference between sequentially acquired output images of the artificial intelligence model 145 and reference binary images 391, 393, and 395 is equal to or less than a predetermined threshold.

For example, the artificial intelligence model training unit 141 may compute the difference between output images and reference binary images 391, 393, and 395 based on a loss function (or cost function). Here, the loss function may include the mean absolute error function, the root mean square error, the mean squared error function, or the binary cross-entropy loss function. Depending on the embodiments, the binary cross-entropy loss function may be a function with weights between 1 and 1000 applied to one color (e.g., white out of black and white) among two colors (or classes).

Subsequently, the artificial intelligence model training unit 141 may adjust the weights of the artificial intelligence model 145 to ensure that the difference is equal to or less than the predetermined threshold (or to reach a minimum value). In an embodiment, the artificial intelligence model training unit 141 may adjust the weights of the artificial intelligence model 145 to ensure that the difference is equal to or less than a predetermined threshold (or has a minimum value) using an algorithm based on gradient descent (e.g., Adam, SGD, and Momentum). Here, the adjusted weights may be determined based on the learning rate. The learning rate may be determined within the range of 0.00000001 to 0.1. For example, the learning rate may be 0.0001.

Sequentially, the artificial intelligence model training unit 141 may train the artificial intelligence model 145 with images included in the next mini-batch. After using all the images included in the mini-batches to train the artificial intelligence model 145, the artificial intelligence model training unit 141 may retrain the artificial intelligence model 145 with images included in the mini-batches based on a predetermined number of epochs.

### Image processing through artificial intelligence models

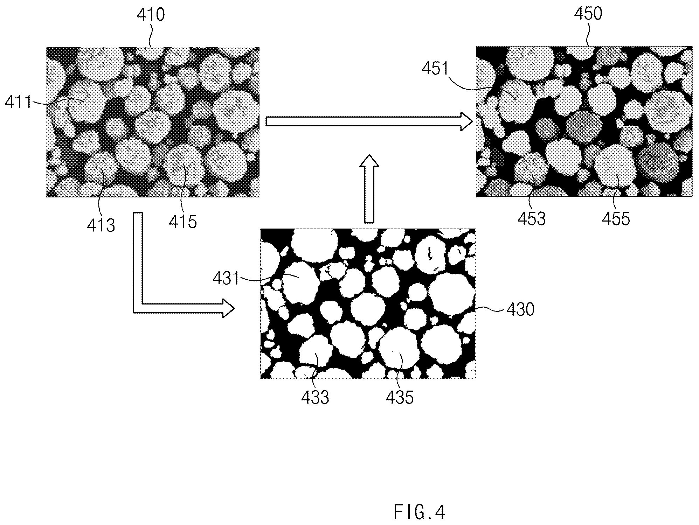

FIG. 4 illustrates images 410, 420, and 430 resulting from image processing of an image processing apparatus 101 according to an embodiment of the present disclosure.

In an embodiment, the image acquisition unit 150 may acquire an active material image 410 of the active materials 411, 413, and 415. In an embodiment, the image acquisition unit 150 may acquire an active material image 410 through the image acquisition device 103.

In an embodiment, the image generation unit 160 may generate a binary image 430. In an embodiment, the image generation unit 160 may generate a binary image 430 by inputting the active material image 410 into the artificial intelligence model 145.

In an embodiment, the object identification unit 170 may identify a plurality of objects 431, 433, and 435 included in the binary image 430. Here, the plurality of objects 431, 433, and 435 included in the binary image 430 may correspond to the active materials 411, 413, and 415 in the active material image 410. In an embodiment, the plurality of objects 431, 433, and 435 may be composed of regions with a predetermined value (e.g., value representing white color). In an embodiment, the plurality of objects 431, 433, and 435 may be distinguished by regions with different predetermined values (e.g., value representing black color). Although only three objects are assigned reference numerals in FIG. 4, it can be seen that there are more objects in the binary image 430 in FIG. 4.

In an embodiment, the image segmentation unit 180 may segment the plurality of active materials 411, 413, and 415 included in the active material image 410 based on plurality of objects 431, 433, and 435 to obtain a segmentation image 450. In an embodiment, the image segmentation unit 180 may segment the plurality of active materials 411, 413, and 415 in the active material image 410 based on the watershed algorithm.

In an embodiment, the information extraction unit 190 may extract information about the active materials 411, 413, and 415 based on the active material objects 451, 453, and 455 included in the segmentation image 450. In an embodiment, the information about the active materials 411, 413, and 415 may include information about the average diameter, average perimeter length, average sphericity, average aspect ratio, average convexity, average solidity, or distribution values of these properties. Additionally, the information about the active materials 411, 413, and 415 may include information about individual properties such as diameter, perimeter length, sphericity, aspect ratio, convexity, and/or solidity for each active material. Furthermore, the information about the active materials 411, 413, and 415 may include information about percentile values (e.g., 1 to 99%, or D5, D50, D95, etc.) for each active material.

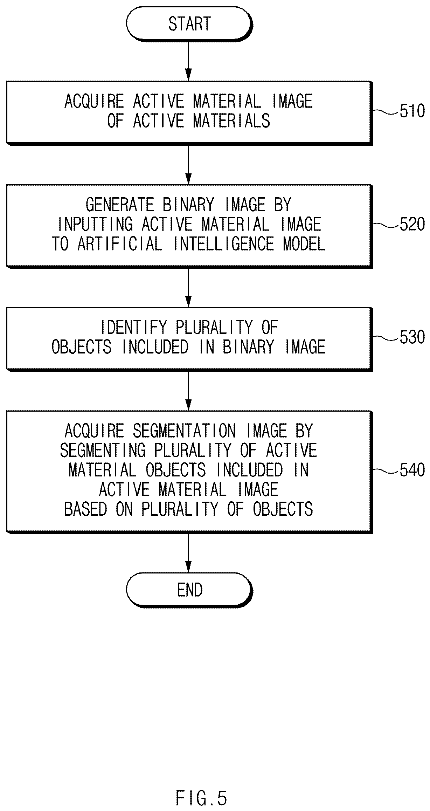

FIG. 5 is a flowchart illustrating an active material image processing method of the image processing apparatus 101 according to an embodiment of the present disclosure.

With reference to FIG. 5, the image acquisition apparatus 101 may acquire an active material image 410 of the active materials 411, 413, and 415 in operation 510. In an embodiment, the image acquisition apparatus 101 may acquire the active material image 410 through the image acquisition device 103.

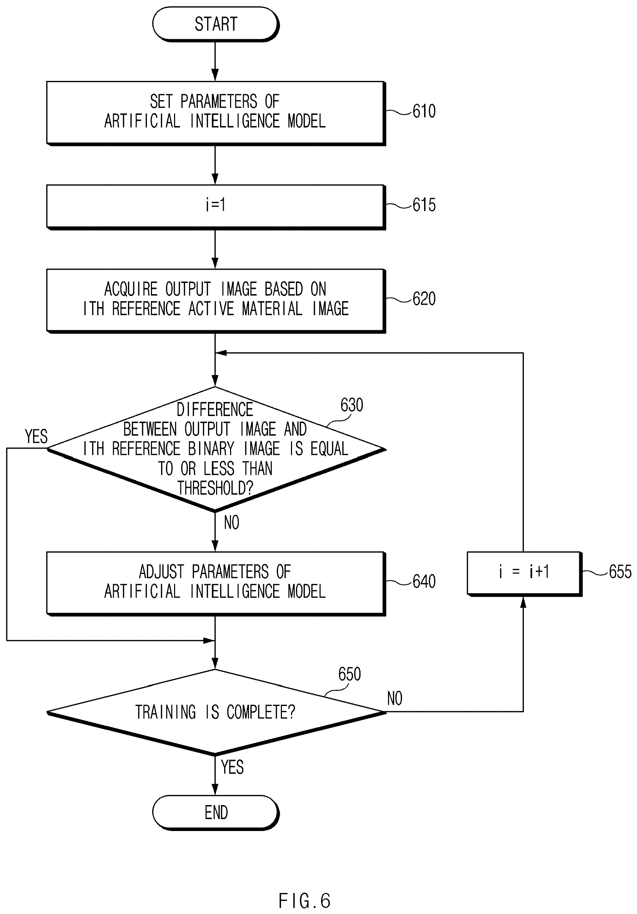

In operation 520, the image processing apparatus 101 may generate a binary image 430 by inputting the active material image 410 to the artificial intelligence model 145. Here, the artificial intelligence model 145 may be a model trained by the artificial intelligence model training method illustrated in FIG. 6.

In operation 530, the image processing apparatus 101 may identify a plurality of objects 431, 433, and 435 included in the binary image 430.

In operation 540, the image processing apparatus 101 may segment the plurality of active materials 411, 413, and 415 included in the active material image 410 based on the plurality of objects 431, 433, and 435 to obtain a segmentation image 450. In an embodiment, the image processing apparatus 101 may segment the plurality of active materials 411, 413, and 415 in the active material image 410 based on the watershed algorithm.

FIG. 6 is a flowchart illustrating an artificial intelligence model training method of the image processing apparatus 101 according to an embodiment of the present disclosure. The operations of FIG. 6 may be applied during the first epoch for the training data.

With reference to FIG. 6, the image processing apparatus 101 may set the parameters of the artificial intelligence model 145 in operation 610. In an embodiment, the image processing apparatus 101 may set the parameters of the artificial intelligence model 145 based on initial parameter values.

In operation 615, the image processing apparatus 101 may set i to 1. Here, i can represent the index of the image set included in the training data. The image set may include reference active material images and corresponding reference binary images.

In operation 620, the image processing apparatus 101 may obtain an output image based on the i^{th} reference active material image. In an embodiment, the image processing apparatus 101 may generate an output image by inputting the i^{th} reference active material image to the artificial intelligence model 145.

In operation 630, the image processing apparatus 101 may determine whether the difference between the output image and the i^{th} reference binary image is equal to or less than a predetermined threshold. In an embodiment, the image processing apparatus 101 may compute the difference between the output image and the i^{th} reference binary image based on a loss function (or cost function). Here, the loss function may include the mean absolute error function, the root mean square error, the mean squared error function, or the binary cross-entropy loss function. Depending on the embodiments, the binary cross-entropy loss function may be a function with weights between 1 and 1000 applied to one color (e.g., white out of black and white) among two colors (or classes).

Based on the determination result in operation 630, when the difference is equal to or less than the predetermined threshold (Yes), the image processing apparatus 101 may proceed to operation 650. Based on the determination result in operation 630, when the difference is greater than the threshold (No), the image processing apparatus 101 may proceed to operation 640.

In operation 640, the image processing apparatus 101 may adjust the parameters of the artificial intelligence model 145. In an embodiment, the image processing apparatus 101 may adjust the parameters of the artificial intelligence model 145 to ensure that the difference is equal to or less than the predetermined threshold (or has minimum value). In an embodiment, the image processing apparatus 101 may adjust the parameters of the artificial intelligence model 145 to ensure that the difference is equal to or less than the predetermined threshold (or has a minimum value) using an algorithm based on gradient descent (e.g., Adam, SGD, Momentum). Here, the adjusted weights may be determined based on the learning rate. The learning rate may be determined within the range of 0.00000001 to 0.1. For example, the learning rate may be 0.0001.

In operation 650,the image processing apparatus 101 may determine whether the training is complete. In an embodiment, when i indicates the end of the image set, it may be determined that the training is complete.

Based on the determination result in operation 650, when the training is complete (Yes), the image processing apparatus 101 may terminate the operations in FIG. 6. Based on the determination result in operation 650, when the training is not complete (No), the image processing apparatus 101 may proceed to operation 655.

In operation 655, the image processing apparatus 101 may increment the value of i by 1. Afterward, operation 620 may be performed again.

Although the image processing apparatus 101 is exemplified as performing an image processing method based on an active material image in this disclosure, this is merely an illustrative example. Depending on the embodiments, the image processing apparatus 101 may separate and/or analyze particles not only in active material images but also in precursor images by performing the same image processing. In an embodiment, the image acquisition device 103 may acquire an image of active materials and/or precursors.

In addition, although it is exemplified that the active material image is a SEM image in this disclosure, this is only an illustrative example. Depending on the embodiments, the active material images may be replaced with images based on transmission electron microscope (TEM), optical microscope (OM), structured illumination microscopy (SIM), or focused ion beam (FIB).

The above-described image processing apparatus 101 and image processing method is capable of automatically quantifying the shape characteristics of a large number of positive electrode active material particles by acquiring an active material image 410 of the plurality of active materials 411, 413, and 415, inputting the active material image 410 to the artificial intelligence model 145 to generate a binary image 430, identifying the plurality of objects 431, 433, and 435 included in the binary image 430, and segmenting the plurality of active materials 411, 413, and 415) included in the active material image 410 based on the plurality of objects 431, 433, and 435.

In addition, the above-described image processing apparatus 101 and image processing method is capable of mitigating the problem of measurement variations depending on the user by utilizing an artificial intelligence model 145 that minimizes the need for user input.

Meanwhile, although the description has provided with an illustrative example of a positive electrode active material image, the technical principles disclosed in this document can be applied in a substantially similar manner even when the active material image is a negative electrode active material image.

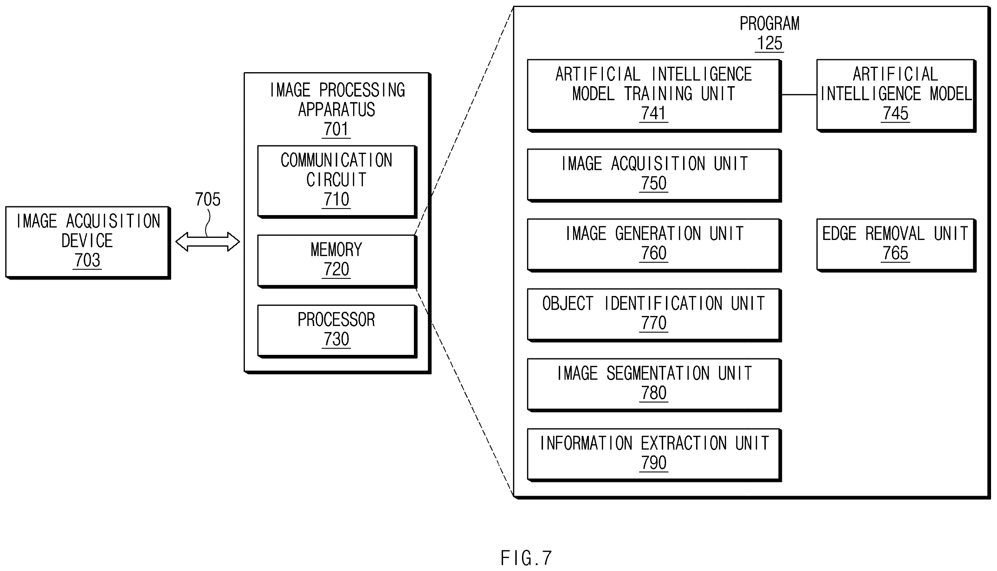

FIG. 7 is a block diagram illustrating an image processing apparatus 701 according to another embodiment of the present disclosure.

With reference to FIG. 7, the image processing apparatus 701 may be connected to an image acquisition device 703 through a wired and/or wireless connection.

According to an embodiment, the connection 705 between the image processing apparatus 701 and the image acquisition device 703 may be a communication link established through wired and/or wireless networks. In an embodiment, the wired network may be based on local area network (LAN) or power line communication. In an embodiment, the wireless network may be based on a short range communication network (e.g., Bluetooth, wireless fidelity (Wi-Fi), infrared data association (IrDA)) or a long-range communication network (e.g., cellular network encompassing 4^{th} Generation (4G) and 5G network networks).

According to another embodiment, the connection 705 between the image processing apparatus 701 and the image acquisition device 703 may be a connection established through an inter-device communication interface (e.g., bus, general purpose input and output (GPIO), serial peripheral interface (SPI), or mobile industry processor interface (MIPI)).

In an embodiment, the image acquisition device 703 may acquire images of the active material and/or precursor. In the following, images of the active material and/or precursor may be referred to as active material images. However, referring to the images as active material images does not exclude images of the precursor.

In an embodiment, the image acquisition device 703 may be a microscope (e.g., a scanning electron microscope). In an embodiment, the image acquisition device 703 may be a device that scans a focused electron beam onto the sample surface, converting secondary electrons generated by the interaction between the electron beam and the sample into image signals to acquire an image of the sample surface.

In an embodiment, the image acquisition device 703 may acquire active images of the active material. For example, the image acquisition device 703 may scan an electron beam onto the positive electrode or negative electrode active material powder to acquire SEM images. That is, the SEM images may include images of both positive electrode and negative electrode active materials. Depending on the embodiments, SEM images may be replaced with images based on transmission electron microscope (TEM), optical microscope (OM), structured illumination microscopy (SIM), or focused ion beam (FIB).

In an embodiment, the image acquisition device 703 may transmit the active material image of the active materials to the image processing apparatus 701. For example, the image acquisition device 703 may transmit the active material image of the active materials to the image processing apparatus 701 through the connection 705.

In an embodiment, the image processing apparatus 701 may be a mobile device (e.g., phone, laptop computer, smartphone, and smart pad) or a computer (e.g., general-purpose computer, special-purpose computer).

With reference to FIG. 1, the image processing apparatus 701 may include a communication circuit 710, a memory 720, and a processor 730. According to an embodiment, the image processing apparatus 701 shown in FIG. 7 may further include at least one additional component (e.g., a display, input device, or output device) other than the components illustrated in FIG. 7.

According to an embodiment, the communication circuit 710 may establish a wired and/or wireless communication channel between the image processing apparatus 701 and an image acquisition device 703 and exchange data with the image acquisition device 703 through the established communication channel.

In an embodiment, the memory 720 may include volatile memory and/or nonvolatile memory.

In an embodiment, the memory 720 may store data used by at least one component of the image processing apparatus 701 (e.g., processor 730). For example, the data may include the program 725 (or instructions related thereto), input data, or output data. In an embodiment, the instructions may be executed by the processor 730 for the image processing apparatus 701 to perform operations defined by the instructions.

In an embodiment, the memory 720 may include programs 725 (e.g., artificial intelligence model training unit 741, artificial intelligence model 745, image acquisition unit 750, image generation unit 760, edge removal unit 765, object identification unit 770, image segmentation unit 780, and/or information extraction unit 790).

In an embodiment, the processor 730 may include a central processing unit, an application processor, a graphic processing unit, a neural processing unit (NPU), an image signal processor, a sensor hub processor, or a communication processor.

In an embodiment, the processor 730 may execute the program 725 (e.g., artificial intelligence model training unit 741, artificial intelligence model 745, image acquisition unit 750, image generation unit 760, edge removal unit 765, object identification unit 770, image segmentation unit 780, and/or information extraction unit 790) to control at least one other component (e.g., hardware or software component) connected to the processor 730 in the image processing apparatus 701 and perform various data processing or operations.

In an embodiment, the artificial intelligence model training unit 741 may train an artificial intelligence model 745 based on training data. In an embodiment, the artificial intelligence model 745 may be a model trained to convert active material images into binary images. In an embodiment, the image acquisition unit 750 may acquire active material images of the active material from the image acquisition device 703. In an embodiment, the image generation unit 760 may generate an edge image by inputting the active material image to the artificial intelligence model 745. In an embodiment, the edge removal unit 765 may generate an edge removed-image by removing boundaries from the active material image based on the edge image. In an embodiment, the object identification unit 770 may identify a plurality of objects included in the edge-removed image. In an embodiment, the image segmentation unit 780 may acquire segmentation images by performing segmentation of the plurality of active materials included in the active material image based on the plurality of objects. In an embodiment, the information extraction unit 790 may extract information about the active material based on the active material objects included in the segmentation image.

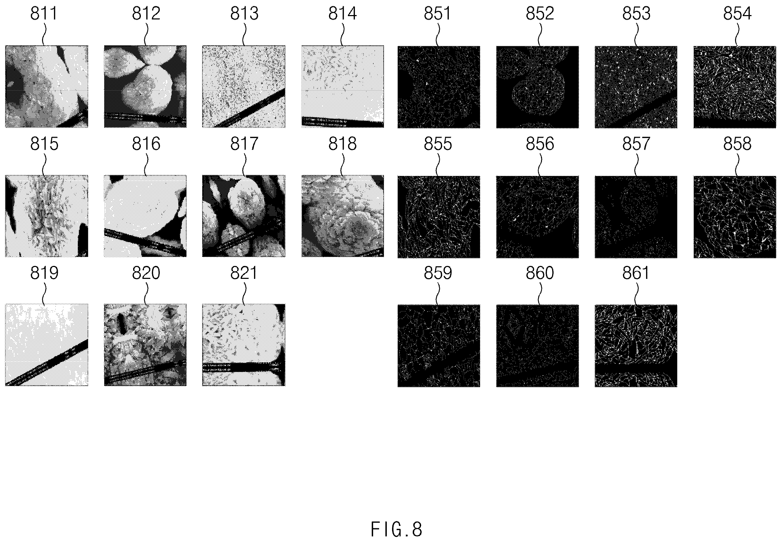

Hereinafter, a description is made of the method for the image processing apparatus 701 to process images acquired from the image acquisition device 703 via the artificial intelligence model training unit 741, artificial intelligence model 745, image acquisition unit 750, image generation unit 760, boundary removal unit 765, object identification unit 770, image segmentation unit 780, and/or information extraction unit 790, with reference to FIGS. 8, 9, 10A, and 10B.

### Training data

FIG. 8 illustrates training data according to another embodiment of the present disclosure.

With reference to FIG. 8, the training data may include reference active material images 811, 812, 813, 814, 815, 818, 819, 820, and 821 and reference edge images 851, 851, 853, 854, 855, 856, 857, 858, 859, 860, and 861.

The sizes of the reference active material images 811, 812, 813, 814, 815, 816, 817, 818, 819, 820, and 821 and reference edge images 851, 851, 853, 854, 855, 856, 857, 858, 859, 860, and 861 included in the training data may be the same. In an embodiment, the size of an image may be defined as the number of horizontal pixels × the number of vertical pixels. In the training data, the number of horizontal pixels may be an integer between 32 and 4096, and the number of vertical pixels may be an integer between 32 and 4096. For example, the size of an image may be 256 × 256.

In an embodiment, the plurality of reference active material images 811, 812, 813, 814, 815, 816, 817, 818, 819, 820, and 821 may include one or more first reference active material images and one or more second reference active material images.

In an embodiment, the first reference active material images may be obtained by capturing images of the active material powder. In an embodiment, the first reference active material images may be SEM images directly obtained through the image acquisition device 703.

In an embodiment, the second reference active material images may be images derived or modified from the first reference active material images. In an embodiment, the second reference active material images may be generated by applying a predetermined first image processing algorithm to the first reference active material images. Here, the first image processing algorithm may include rotation, tilt, shear, brightness adjustment, contrast adjustment, enlargement, reduction, or combinations thereof.

In an embodiment, the plurality of reference edge images 851, 851, 853, 854, 855, 856, 857, 858, 859, 860, and 861 may include one or more first reference edge images and one or more second reference edge images.

In an embodiment, the first reference edge images may be generated by applying a second image processing algorithm to the first reference active material images. Here, the second image processing algorithm may include the mean shift filter and/or edge detection algorithm.

In an embodiment, the second reference edge images may be images derived or modified from the first reference edge material images. In an embodiment, the second reference edge images may be generated by applying a predetermined first image processing algorithm to the first reference edge images. Here, the first image processing algorithm may include rotation, tilt, shear, brightness adjustment, contrast adjustment, enlargement, reduction, or any combination thereof.

In an embodiment, the first reference edge images may be edge images of the first reference active material images, and the second reference edge images may be edge images of the second reference active material images. For example, the reference edge image 851 may be an edge image of the reference active material image 811, the reference edge image 856 may be an edge image of the reference active material image 816, and the reference edge image 861 may be an edge image of the reference active material image 821. Accordingly, the plurality of reference active material images 8811, 812, 813, 814, 815, 816, 817, 818, 819, 820, and 821 and the plurality of reference edge images 851, 851, 853, 854, 855, 856, 857, 858, 859, 860, and 861 may be classified into image sets of corresponding images. For example, the reference active material image 811 and the reference edge image 851 may be classified into one image set.

In an embodiment, the training data may be used to train the artificial intelligence model 745. In an embodiment, the training data may be used to train the artificial intelligence model 745 for a predetermined number of epochs. Here, the predetermined number may be determined between 100 and 10000. For example, the predetermined number can be 3000.

In an embodiment, the training data may be divided into mini-batches of a predetermined batch size. Here, the batch size can be determined between 1 and 512. For example, the batch size may be 4. When the batch size is 4, each mini-batch may be composed of 4 image sets (i.e., 4 reference active material images and 4 reference edge images). For example, the reference active material images 811, 812, 813, and 814 and reference edge images 851, 852, 853, and 854 may form the first mini-batch, and the reference active material images 815, 816, 817, and 818 and reference edge images 855, 856, 857, and 858 may form the second mini-batch.

### Artificial intelligence model

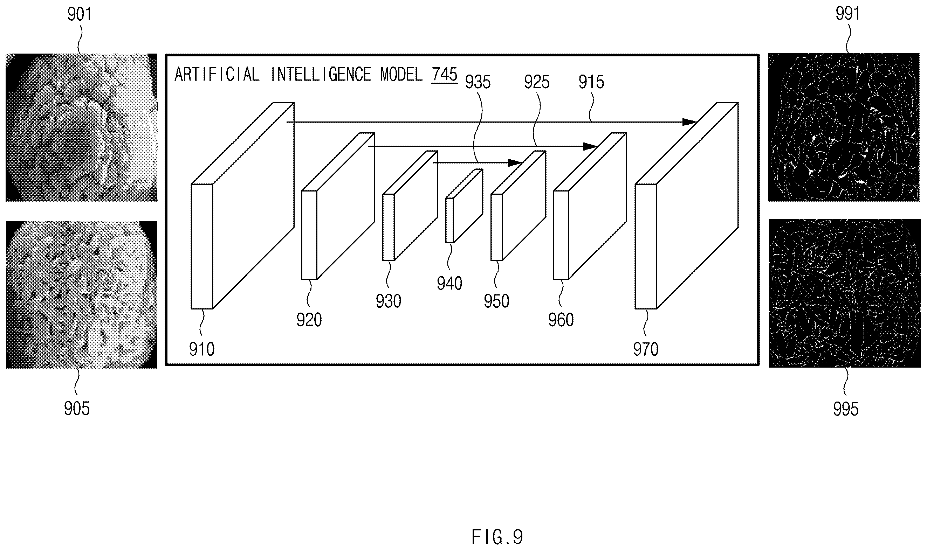

FIG. 9 illustrates an artificial intelligence model 745 according to another embodiment of the present disclosure. Specifically, FIG. 9 shows an example of training the artificial intelligence model 745 through a mini-batch consisting of reference active material images 901 and 905 and reference edge images 991 and 995.

In an embodiment, the artificial intelligence model 745 may be a model based on convolutional neural network (CNN) or U-Net. In an embodiment, the artificial intelligence model 745 may be a model trained to convert active material images into edge images.

With reference to FIG. 9, the artificial intelligence model 745 may include a plurality of layers 910, 920, 930, 940, 950, 960, and 970. The plurality of layers 910, 920, 930, 940, 950, 960, and 970 may be connected sequentially. The input of a sequentially connected layer is the output of the layer before it, and the output of a sequentially connected layer can be the input of the layer after it. For example, the output of layer 910 may be the input of layer 920.

At least two layers (e.g., layers 910 and 970, layers 920 and 960 or layers 930 and 950) among the plurality of layers 910, 920, 930, 940, 950, 960, and 970 may be connected through skip connections 915, 925, and 935. In an embodiment, skip connections 915, 925, and 935 may connect layers included in the encoding area (e.g., layers 910, 920, and 930) with layers included in the decoding area (e.g., layers 950, 960, and 970) among the plurality of layers 910, 920, 930, 940, 950, 960, and 970. Here, the skip connections 915, 925, and 935 may be interlayer connections for inputting the output of the layers 910, 920, and 930 to the layers 950, 960, and 970. For example, through the skip connection 935, the layer 950 may receive the output of the layer 940 and the output of the layer 930 as inputs.

In an embodiment, the plurality of layers 910, 920, 930, 940, 950, 960, and 970 may include an input layer, a batch normalization layer, a 2D convolution layer, an activation layer, a max pooling layer, an up-sampling layer, a concatenate layer, or any combination thereof. In an embodiment, the layers included in the encoding area (e.g., layers 910, 920, and 930) may have a structure in which a 2D convolution layer, a batch normalization layer, an activation layer, and a max pooling layer are sequentially connected. Similarly, the layers included in the decoding area (e.g., layers 950, 960, and 970) may have a structure where a 2D convolution layer, a batch normalization layer, an activation layer, and an up-sampling layer are sequentially connected.

In an embodiment, the input layer may be a layer that receives the bit values included in the reference active material images 901, and 905. In an embodiment, the input layer may acquire input consisting of bit values corresponding to the number of horizontal pixels × the number of vertical pixels × the number of channels (or depth). For example, when the reference active material image has a size of N × N, the input layer may receive N × N × 1 bit values. Here, N may be an integer between 32 and 4096 (e.g., 256). Depending on the embodiments, the number of channels may also be referred to as depth.

In an embodiment, the batch normalization layer may be a layer to normalize the output values of the previous layer on a batch basis. Depending on the embodiments, the batch normalization layer may be placed just before the activation layer. Here, a batch may include reference active material images input to the artificial intelligence model 745 during one iteration to train the model. For example, when the batch size is 4, the number of reference active material images input to the artificial intelligence model 745 during one iteration may be 4. Here, the batch size may be an integer between 1 and 512 (e.g., 4).

In an embodiment, the 2D convolution layer may be a layer performing a convolution operation on an input and a filter of a predetermined size to obtain output. In an embodiment, the 2D convolution layer included in the artificial intelligence model 745 assumes that the output image size (number of horizontal pixels × number of vertical pixels) is the same as the input image size (number of horizontal pixels × number of vertical pixels). In an embodiment, the number of channels in the output may vary depending on the number of filters (or depth) in the 2D convolution layer. For example, when the number of filters is 2, the number of channels in the output may increase by twice compared to the number of channels in the input. In an embodiment, the number of channels in the output may vary depending on the stride in the depth direction of the 2D convolution layer. For example, when the stride in the depth direction is 2, the number of channels in the output may decrease by half compared to the number of channels in the input.

In an embodiment, the activation layer may be a layer applying a predetermined activation function to the input to obtain the output. For example, the predetermined activation function may include step, sigmoid, rectifier linear unit (ReLU), exponential linear unit (ELU), softmax, or any combination thereof.

In an embodiment, the max pooling layer may be a layer selecting the maximum value in each pooling region of the input to obtain the output. In an embodiment, the size of the pooling region in the max pooling layer may affect the image size of the output (i.e., the number of horizontal pixels and vertical pixels). For example, when the pooling region size is 2 × 2, the output image size (e.g., 128 × 128) may be reduced by half compared to the input image size (e.g., 256 × 256). Depending on the embodiments, the artificial intelligence model 745 may include a pooling layer other than max pooling layer. For example, another type of pooling layer may include an average pooling layer.

In an embodiment, the up-sampling layer may be a layer used to increase the resolution of an image. In an embodiment, the up-sampling layer may be a layer increasing the image size of the output compared to the input using a predetermined interpolation algorithm.

In an embodiment, the concatenate layer may concatenate two or more inputs to produce the output. Here, concatenation may be a depth-wise connection. For example, when the first input is 128 × 128 × 128 and the second input is 128 × 128 × 128, the output of the concatenate layer may be 128 × 128 × 256. When the first input is 256 × 256 × 64 and the second input is 128 × 128 × 128, the output of the concatenate layer may be 256 × 256 × 128.

Although FIG. 9 depicts 7 layers 910, 920, 930, 940, 950, 960, and 970 are 7, this is merely an illustrative example, and the number of layers is not limited to 7. For example, the number of layers included in the artificial intelligence model 745 may be 32.

When the number of layers included in the artificial intelligence model 745 is 32, the artificial intelligence model 745 may have a structure in which the input layer, first batch normalization layer, first 2D convolutional layer, and second 2D convolutional layer are connected sequentially. The input of a sequentially connected layer is the output of the layer before it, and the output of a sequentially connected layer can be the input of the layer after it. Here, the input of the input layer may be 256 × 256 × 1, and the output may be 256 × 256 × 1. The output of the first batch normalization layer may be 256 × 256 × 1. The output of the first 2D convolution layer may be 256 × 256 × 64. The output of the second 2D convolution layer may be 256 × 256 × 64.

Following the second 2D convolution layer, the artificial intelligence model 745 may have a structure in which the second batch normalization layer, the first activation layer, and the first max pooling layer are connected sequentially. Here, the output of the second batch normalization layer may be 256 × 256 × 64. The output of the first activation layer may be 256 × 256 × 64. The output of the first max pooling layer may be 128 × 128 × 64.

Following the first max pooling layer, the artificial intelligence model 745 may have a structure in which the third 2D convolution layer, the fourth 2D convolution layer, the third batch normalization layer, the second activation layer, and the second max pooling layer are connected sequentially. Here, the output of the third 2D convolution layer may be 128 × 128 × 128. The output of the fourth 2D convolution layer may be 128 × 128 × 128. The output of the third batch normalization layer may be 128 × 128 × 128. The output of the second activation layer may be 128 × 128 × 128. The output of the second max pooling layer may be 64 × 64 × 128.

Following the second max pooling layer, the artificial intelligence model 745 may have a structure in which the fifth 2D convolution layer, the sixth 2D convolution layer, the fourth batch normalization layer, the third activation layer, and the first up-sampling layer are connected sequentially. Here, the output of the fifth 2D convolution layer may be 64 × 64× 256. The output of the sixth 2D convolution layer may be 64 × 64 × 256. The output of the fourth batch normalization layer may be 64 × 64 × 256. The output of the third activation layer may be 64 × 64 × 256. The output of the first up-sampling layer may be 128 × 128 × 256.

Following the first up-sampling layer, the artificial intelligence model 745 may have a structure in which the seventh 2D convolution layer, the first concatenation layer, the eighth 2D convolution layer, the ninth 2D convolution layer, the fifth batch normalization layer, the fourth activation layer, and the second up-sampling layer are connected sequentially. Of the two inputs to the first concatenation layer, the first input may be the output of the seventh 2D convolution layer, and the second input may be the output of the fourth 2D convolution layer. Here, the output of the seventh 2D convolution layer may be 128 × 128 × 128. The output of the first concatenate layer may be 128 × 128 × 256. The output of the eighth 2D convolution layer may be 128 × 128 × 128. The output of the ninth 2D convolution layer may be 128 × 128 × 128. The output of the fifth batch normalization layer may be 128 × 128 × 128. The output of the fourth activation layer may be 128 × 128 × 128. The output of the second up-sampling layer may be 256 × 256 × 128.

Following the second up-sampling layer, the artificial intelligence model 745 may have a structure in which the tenth 2D convolution layer, the second concatenation layer, the eleventh 2D convolution layer, the twelfth 2D convolution layer, the sixth batch normalization layer, the fifth activation layer, the thirteenth 2D convolution layer, and the fourteenth 2D convolution layer are connected sequentially. Of the two inputs to the second concatenate layer, the first input may be the output of the tenth 2D convolution layer, and the second input may be the output of the second 2D convolution layer. Here, the output of the tenth 2D convolution layer may be 128 × 128 × 64. The output of the second concatenate layer may be 256 × 256 × 128. The output of the eleventh 2D convolution layer may be 256 × 256 × 64. The output of the twelfth 2D convolution layer may be 256 × 256 × 64. The output of the sixth batch normalization layer may be 256 × 256 × 64. The output of the fifth activation layer may be 256 × 256 × 64. The output of the thirteenth 2D convolution layer may be 256 × 256 × 2. The output of the fourteenth 2D convolution layer may be 256 × 256 × 2.

### Artificial Intelligence Model Learning

A description is made of the operation of the artificial intelligence model training unit 741 for training the artificial intelligence model 745 through the images 901, 905, 991, and 995 included in a mini-batch, with reference to FIG. 9.

In an embodiment, the artificial intelligence model training unit 741 may sequentially input reference active material images 901 and 905 to the artificial intelligence model 745.

In an embodiment, the artificial intelligence model training unit 741 may train the artificial intelligence model 745 to ensure that the difference between sequentially acquired output images of the artificial intelligence model 745 and reference edge images 991 and 995 is equal to or less than a predetermined threshold.

For example, the artificial intelligence model training unit 741 may compute the difference between output images and reference edge images 991 and 995 based on a loss function (or cost function). Here, the loss function may include the mean absolute error function, the root mean square error, the mean squared error function, or the binary cross-entropy loss function. Depending on the embodiments, the binary cross-entropy loss function may be a function with weights between 1 and 1000 applied to one color (e.g., white out of black and white) among two colors (or classes).

Subsequently, the artificial intelligence model training unit 741 may adjust the weights of the artificial intelligence model 745 to ensure that the difference is equal to or less than the predetermined threshold (or to reach a minimum value). In an embodiment, the artificial intelligence model training unit 741 may adjust the weights of the artificial intelligence model 745 to ensure that the difference is equal to or less than a predetermined threshold (or has a minimum value) using an algorithm based on gradient descent (e.g., Adam, SGD, and Momentum). Here, the adjusted weights may be determined based on the learning rate. The learning rate may be determined within the range of 0.00000001 to 0.1. For example, the learning rate may be 0.0001.

Sequentially, the artificial intelligence model training unit 741 may train the artificial intelligence model 745 with images included in the next mini-batch. After using all the images included in the mini-batches to train the artificial intelligence model 745, the artificial intelligence model training unit 741 may retrain the artificial intelligence model 745 with images included in the mini-batches based on a predetermined number of epochs.

### Image processing through artificial intelligence models

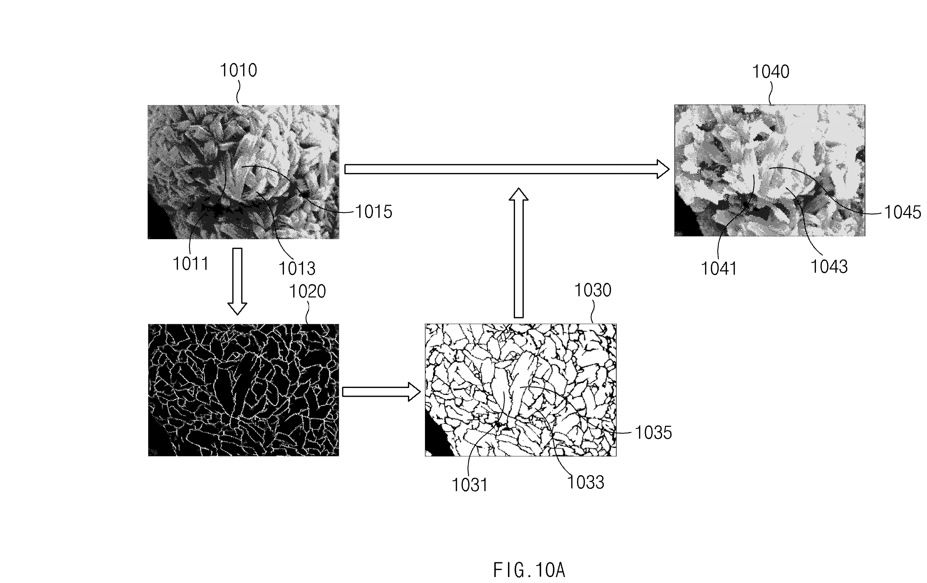

FIG. 10A illustrates images 1010, 1020, 1030, and 1040 resulting from image processing of an image processing apparatus according to another embodiment of the present disclosure.

In an embodiment, the image acquisition unit 750 may acquire an active material image 1010 of the active materials 1011, 1013, and 1015. In an embodiment, the image acquisition unit 750 may acquire an active material image 1010 through the image acquisition device 703.

In an embodiment, the image generation unit 760 may generate an edge image 1020. In an embodiment, the image generation unit 760 may generate the edge image 1020 by inputting the active material image 1010 to the artificial intelligence model 745.

In an embodiment, the edge removal unit 765 may generate an edge removed-image 1030 by removing edges from the active material image 1010 based on the edge image 1020. In an embodiment, the edge removal unit 765 may generate the edge-removed image 1030 by subtracting the edge image 1020 from the active material image 1010. In an embodiment, the edge removal unit 765 may generate the edge-removed image 1030 by subtracting the edge image 1020 from the active material image 1010 and then binarizing the result. Depending on the embodiments, the edge-removed image may also be referred to as binary image.

In an embodiment, the object identification unit 770 may identify a plurality of objects 1031, 1033, and 1035 included in the edge-removed image 1030. Here, the plurality of objects 1031, 1033, and 1035 included in the edge-removed image 1030 may correspond to the active materials 1011, 1013, and 1015 in the active material image 1010. In an embodiment, the plurality of objects 1031, 1033, and 1035 may be composed of regions with a predetermined value (e.g., value representing white color). In an embodiment, the plurality of objects 1031, 1033, and 1035 may be distinguished by regions with different predetermined values (e.g., value representing black color). Although only three objects are assigned reference numerals in FIG. 10A, it can be seen that there are more objects in the edge-removed image 1030 in FIG. 10A.

In an embodiment, the image segmentation unit 780 may segment the plurality of active materials 1011, 1013, and 1015 included in the active material image 1010 based on plurality of objects 1031, 1033, and 1035 to obtain a segmentation image 1040. In an embodiment, the image segmentation unit 780 may segment the plurality of active materials 1011, 1013, and 1015 in the active material image 1010 based on the watershed algorithm. Here, the plurality of active materials 1011, 1013, and 1015 included in the active material image 1010 may correspond to the plurality of active material objects 1041, 1043, and 1045 included in the segmentation image 1040, respectively.

In an embodiment, the information extraction unit 790 may extract information about the active materials 1011, 1013, and 1015 based on the active material objects 1041, 1043, and 1045 included in the segmentation image 1040. In an embodiment, the information about the active materials 1011, 1013, and 1015 may include information about the average diameter, average perimeter length, average sphericity, average aspect ratio, average convexity, average solidity, or distribution values of these properties. Additionally, the information about the active materials 1011, 1013, and 1015 may include information about individual properties such as diameter, perimeter length, sphericity, aspect ratio, convexity, and/or solidity for each active material. Furthermore, the information about the active materials 1011, 1013, and 1015 may include information about percentile values (e.g., 1 to 99%, or D5, D50, D95, etc.) for each active material.

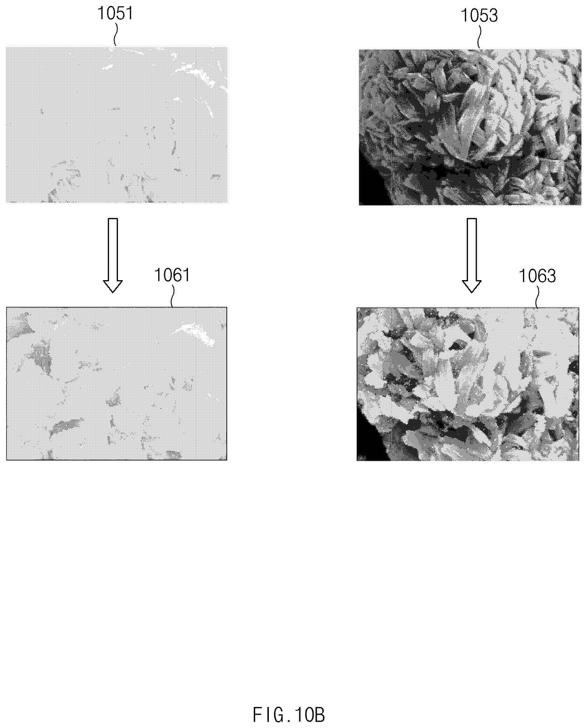

FIG. 10B illustrates differences in images resulting from image processing of the image processing apparatus 701 according to another embodiment of the present disclosure.

With reference to FIG. 10B, the user may visually perceive the differences between the two active material images 1051 and 1053, but it is difficult to quantify them. However, by segmenting the active materials as shown in the two segmentation images 1061 and 1063, the image processing apparatus 701 may acquire information about the active materials, allowing quantitative measurement of the active materials.

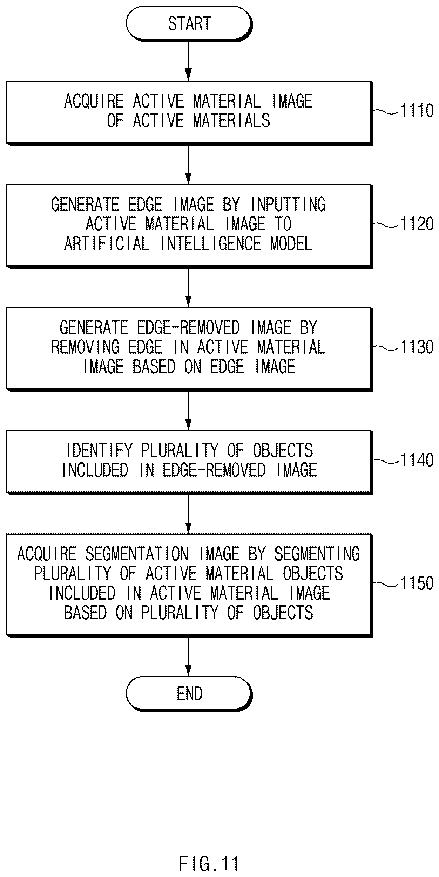

FIG. 11 is a flowchart illustrating an active material image processing method of the image processing apparatus 101 according to another embodiment of the present disclosure.

With reference to FIG. 11, the image acquisition apparatus 701 may acquire an active material image 1010 of the active materials 1011, 1013, and 1015, in operation 1110. In an embodiment, the image acquisition apparatus 701 may acquire the active material image 1010 through the image acquisition device 703.

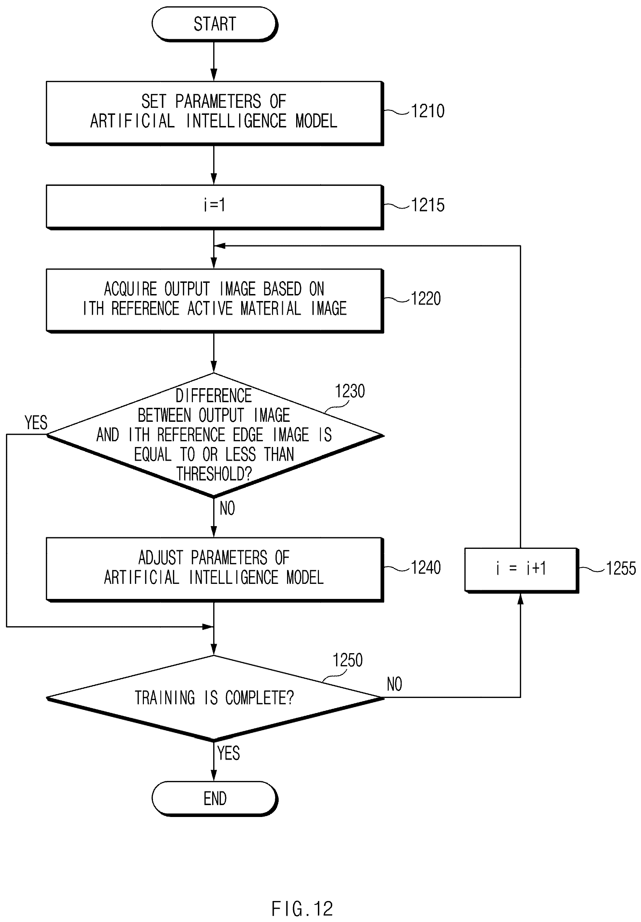

In operation 1120, the image processing apparatus 701 may generate an edge image 1020 by inputting the active material image 1010 to the artificial intelligence model 745. Here, the artificial intelligence model 745 may be a model trained by the artificial intelligence model training method illustrated in FIG. 12.

In operation 1130, the image processing apparatus 701 may generate an edge-removed image 1030 by removing edges from the active material image 1010 based on the edge image 1020. In an embodiment, the image processing apparatus 701 may generate the edge-removed image 1030 by subtracting the edge image 1020 from the active material image 1010. In an embodiment, the image processing apparatus 701 may generate the edge-removed image 1030 by subtracting the edge image 1020 from the active material image 1010 and binarizing the result.

In operation 1140, the image processing apparatus 701 may identify a plurality of objects 1031, 1033, and 1035 included in the edge-removed image 1030.

In operation 1150, the image processing apparatus 701 may segment the plurality of active materials 1011, 1013, and 1015 included in the active material image 1010 based on the plurality of objects 1031, 1033, and 1035 to obtain a segmentation image 1040. In an embodiment, the image processing apparatus 701 may segment the plurality of active materials 1011, 1013, and 1015 in the active material image 1010 based on the watershed algorithm. Here, the plurality of objects 1011, 1013, and 1015 included in the active material image 1010 may correspond to the active material objects 1041, 1043, and 1045 included in the segmentation image 1040, respectively.

FIG. 12 is a flowchart illustrating an intelligence model training method of the image processing apparatus 701 according to another embodiment of the present disclosure. The operations of FIG. 12 may be applied during the first epoch for the training data.

With reference to FIG. 12, the image processing apparatus 701 may set the parameters of the artificial intelligence model 745 in operation 1210. In an embodiment, the image processing apparatus 701 may set the parameters of the artificial intelligence model 745 based on initial parameter values.

In operation 1215, the image processing apparatus 701 may set i to 1. Here, i can represent the index of the image set included in the training data. The image set may include reference active material images and corresponding reference edge images.

In operation 120, the image processing apparatus 701 may obtain an output image based on the i^{th} reference active material image. In an embodiment, the image processing apparatus 701 may generate an output image by inputting the i^{th} reference active material image to the artificial intelligence model 745.

In operation 1230, the image processing apparatus 701 may determine whether the difference between the output image and the i^{th} reference edge image is equal to or less than a predetermined threshold. In an embodiment, the image processing apparatus 701 may compute the difference between the output image and the i^{th} reference edge image based on a loss function (or cost function). Here, the loss function may include the mean absolute error function, the root mean square error, the mean squared error function, or the binary cross-entropy loss function. Depending on the embodiments, the binary cross-entropy loss function may be a function with weights between 1 and 1000 applied to one color (e.g., white out of black and white) among two colors (or classes).

Based on the determination result in operation 1230, when the difference is equal to or less than the predetermined threshold (Yes), the image processing apparatus 701 may proceed to operation 1250. Based on the determination result in operation 1230, when the difference is greater than the threshold (No), the image processing apparatus 101 may proceed to operation 1240.

In operation 1240, the image processing apparatus 701 may adjust the parameters of the artificial intelligence model 745. In an embodiment, the image processing apparatus 701 may adjust the parameters of the artificial intelligence model 745 to ensure that the difference is equal to or less than the predetermined threshold (or has minimum value). In an embodiment, the image processing apparatus 701 may adjust the parameters of the artificial intelligence model 745 to ensure that the difference is equal to or less than the predetermined threshold (or has a minimum value) using an algorithm based on gradient descent (e.g., Adam, SGD, Momentum). Here, the adjusted weights may be determined based on the learning rate. The learning rate may be determined within the range of 0.00000001 to 0.1. For example, the learning rate may be 0.0001.

In operation 1250, the image processing apparatus 701 may determine whether the training is complete. In an embodiment, when i indicates the end of the image set, it may be determined that the training is complete.

Based on the determination result in operation 1250, when the training is complete (Yes), the image processing apparatus 701 may terminate the operations in FIG. 12. Based on the determination result in operation 1250, when the training is not complete (No), the image processing apparatus 701 may proceed to operation 655.

In operation 1255, the image processing apparatus 701 may increment the value of i by 1. Afterward, operation 1220 may be performed again.

Although the image processing apparatus 701 is exemplified as performing an image processing method based on an active material image in this disclosure, this is merely an illustrative example. Depending on the embodiments, the image processing apparatus 701 may separate and/or analyze particles not only in active material images but also in precursor images by performing the same image processing. In an embodiment, the image acquisition device 703 may acquire an image of active materials and/or precursors.

In addition, although it is exemplified that the active material image is a SEM image in this disclosure, this is only an illustrative example. Depending on the embodiments, the active material images may be replaced with images based on transmission electron microscope (TEM), optical microscope (OM), structured illumination microscopy (SIM), or focused ion beam (FIB).

The above-described image processing apparatus 701 and image processing method is capable of automatically quantifying the shape characteristics of a large number of positive electrode active material particles by acquiring an active material image 1010 of the plurality of active materials 1011, 1013, and 1015, inputting the active material image 1010 to the artificial intelligence model 745 to generate an edge image 1020, removing the edges from the active material image 1010 based on the edge image 1020 to create an edge-removed image 1030, identifying the plurality of objects 1031, 1033, and 1035 included in the edge-removed image 1030, and segmenting the plurality of active materials 1011, 1013, and 1015) included in the active material image 1010 based on the plurality of objects 1031, 1033, and 1035.

In addition, the above-described image processing apparatus 701 and image processing method is capable of mitigating the problem of measurement variations depending on the user by utilizing an artificial intelligence model 745 that minimizes the need for user input.

Meanwhile, although the description has provided with an illustrative example of a positive electrode active material image, the technical principles disclosed in this document can be applied in a substantially similar manner even when the active material image is a negative electrode active material image.

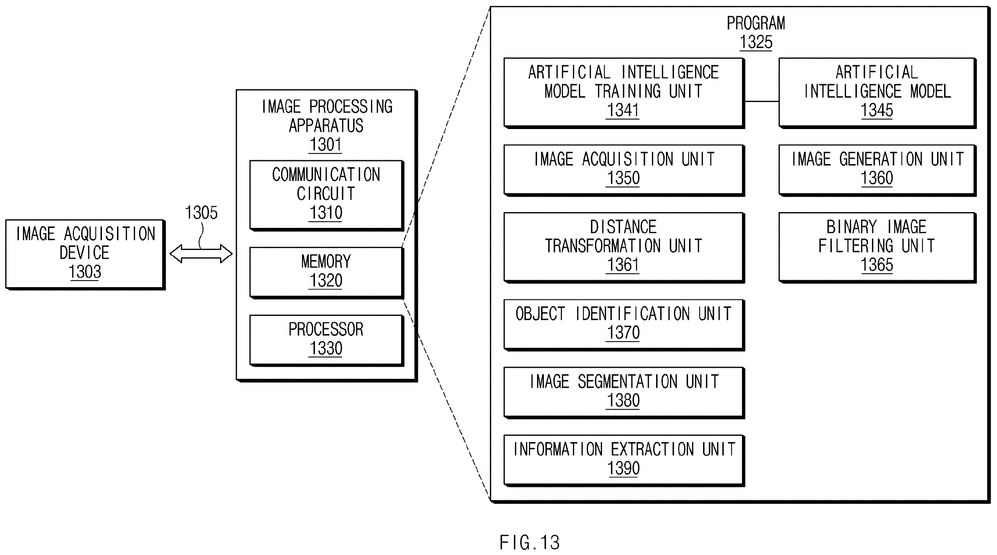

FIG. 13 is a block diagram illustrating an image processing apparatus 1301 according to another embodiment of the present disclosure.

With reference to FIG. 13, the image processing apparatus 1301 may be connected to an image acquisition device 1303 through a wired and/or wireless connection.

According to an embodiment, the connection 1305 between the image processing apparatus 1301 and the image acquisition device 1303 may be a communication link established through wired and/or wireless networks. In an embodiment, the wired network may be based on local area network (LAN) or power line communication. In an embodiment, the wireless network may be based on a short range communication network (e.g., Bluetooth, wireless fidelity (Wi-Fi), infrared data association (IrDA)) or a long-range communication network (e.g., cellular network encompassing 4^{th} Generation (4G) and 5G network networks).

According to another embodiment, the connection 1305 between the image processing apparatus 1301 and the image acquisition device 1303 may be a connection established through an inter-device communication interface (e.g., bus, general purpose input and output (GPIO), serial peripheral interface (SPI), or mobile industry processor interface (MIPI)).

In an embodiment, the image acquisition device 1303 may acquire images of the active material and/or precursor. In the following, images of the active material and/or precursor may be referred to as active material images. However, referring to the images as active material images does not exclude images of the precursor.

In an embodiment, the image acquisition device 1303 may be a microscope (e.g., a scanning electron microscope). In an embodiment, the image acquisition device 1303 may be a device that scans a focused electron beam onto the sample surface, converting secondary electrons generated by the interaction between the electron beam and the sample into image signals to acquire an image of the sample surface.

In an embodiment, the image acquisition device 1303 may acquire active images of the active material. For example, the image acquisition device 1303 may scan an electron beam onto the positive electrode or negative electrode active material powder to acquire SEM images. That is, the SEM images may include images of both positive electrode and negative electrode active materials. Depending on the embodiments, SEM images may be replaced with images based on transmission electron microscope (TEM), optical microscope (OM), structured illumination microscopy (SIM), or focused ion beam (FIB).

In an embodiment, the image acquisition device 1303 may transmit the active material image of the active materials to the image processing apparatus 1301. For example, the image acquisition device 1303 may transmit the active material image of the active materials to the image processing apparatus 1301 through the connection 1305.

In an embodiment, the image processing apparatus 1301 may be a mobile device (e.g., phone, laptop computer, smartphone, and smart pad) or a computer (e.g., general-purpose computer, special-purpose computer).

With reference to FIG. 1, the image processing apparatus 1301 may include a communication circuit 1310, a memory 1320, and a processor 1330. According to an embodiment, the image processing apparatus 1301 shown in FIG. 13 may further include at least one additional component (e.g., a display, input device, or output device) other than the components illustrated in FIG. 13.

According to an embodiment, the communication circuit 1310 may establish a wired and/or wireless communication channel between the image processing apparatus 1301 and an image acquisition device 1303 and exchange data with the image acquisition device 1303 through the established communication channel.

**In** an embodiment, the memory 1320 may include volatile memory and/or nonvolatile memory.

**In** an embodiment, the memory 1320 may store data used by at least one component of the image processing apparatus 1301 (e.g., processor 1330). For example, the data may include the program 1325 (or instructions related thereto), input data, or output data. **In** an embodiment, the instructions may be executed by the processor 1330 for the image processing apparatus 1301 to perform operations defined by the instructions.

**In** an embodiment, the memory 1320 may include programs 1325 (e.g., artificial intelligence model training unit 1341, artificial intelligence model 1345, image acquisition unit 1350, image generation unit 1360, distance transformation unit 1361, binary image filtering unit 1365, object identification unit 1370, image segmentation unit 1380, and/or information extraction unit 1390).

**In** an embodiment, the processor 1330 may include a central processing unit, an application processor, a graphic processing unit, a neural processing unit (NPU), an image signal processor, a sensor hub processor, or a communication processor.

**In** an embodiment, the processor 1330 may execute the program 1325 (e.g., artificial intelligence model training unit 1341, artificial intelligence model 1345, image acquisition unit 1350, image generation unit 1360, distance transformation unit 1361, binary image filtering unit 1365, object identification unit 1370, image segmentation unit 1380, and/or information extraction unit 1390) to control at least one other component (e.g., hardware or software component) connected to the processor 1330 in the image processing apparatus 1301 and perform various data processing or operations.

**In** an embodiment, the artificial intelligence model training unit 1341 may train an artificial intelligence model 1345 based on training data. In an embodiment, the artificial intelligence model 1345 may be a model trained to convert active material images into binary images. In an embodiment, the image acquisition unit 1350 may acquire active material images of the active material from the image acquisition device 1303. In an embodiment, the image generation unit 1360 may generate binary images by inputting active material images into the artificial intelligence model 1345. In an embodiment, the distance transformation unit 1361 may transform a binary image into a distance transformation image based on a distance transformation algorithm. In an embodiment, the binary image filtering unit 1365 may filter a binary image using a threshold set based on the distance transformation image. In an embodiment, the object identification unit 1370 may identify a plurality of objects included in the filtered images. In an embodiment, the image segmentation unit 1380 may acquire segmentation images by performing segmentation of the plurality of active materials included in the active material image based on the plurality of objects. In an embodiment, the information extraction unit 1390 may extract information about the active material based on the active material objects included in the segmentation image.

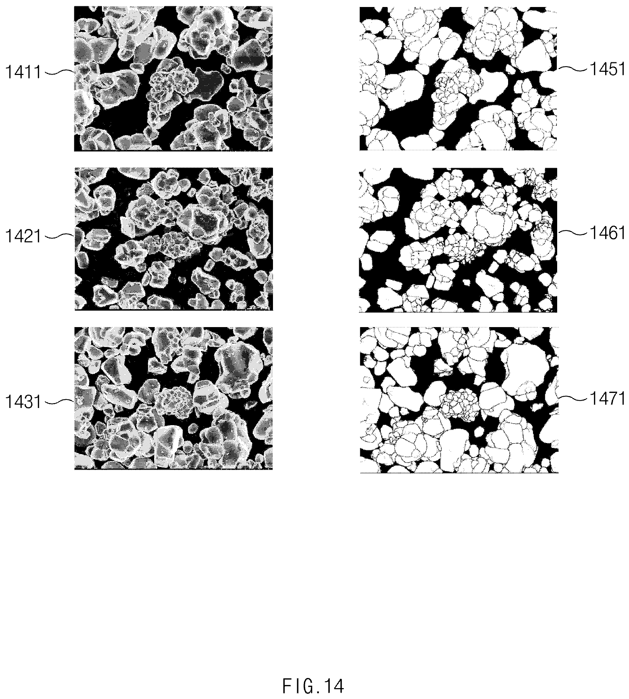

Hereinafter, a description is made of the method for the image processing apparatus 1301 to process images acquired from the image acquisition device 1303 via the artificial intelligence model training unit 1341, artificial intelligence model 1345, image acquisition unit 1350, image generation unit 1360, distance transformation unit 1361, binary image filtering unit 1365, object identification unit 1370, image segmentation unit 1380, and/or information extraction unit 1390, with reference to FIGS. 14, 15, 16A, and 16B.

### Training data

FIG. 14 illustrates training data according to still another embodiment of the present disclosure;

With reference to FIG. 14, the training data may include reference active material images 1411, 1421, and 1431 and reference binary images 1451, 1461, and 1471.

The sizes of the reference active material images 1411, 1421, and 1431 and reference binary images 1451, 1461, and 1471 included in the training data may be the same. In an embodiment, the size of an image may be defined as the number of horizontal pixels × the number of vertical pixels. In the training data, the number of horizontal pixels may be an integer between 32 and 4096, and the number of vertical pixels may be an integer between 32 and 4096. For example, the size of an image may be 256 × 256.

In an embodiment, the plurality of reference active material images 1411, 1421, and 1431 may include one or more first reference active material images and one or more second reference active material images.

In an embodiment, the first reference active material images may be obtained by capturing images of the active material powder. In an embodiment, the first reference active material images may be SEM images directly obtained through the image acquisition device 1303.

In an embodiment, the second reference active material images may be images derived or modified from the first reference active material images. In an embodiment, the second reference active material images may be generated by applying a predetermined first image processing algorithm to the first reference active material images. Here, the first image processing algorithm may include rotation, tilt, shear, brightness adjustment, contrast adjustment, enlargement, reduction, or combinations thereof.

In an embodiment, the plurality of reference binary images 1451, 1461, and 1471 may include one or more first reference binary images and one or more second reference binary images.

In an embodiment, the first reference binary images may be generated by applying a second image processing algorithm to the first reference active material images. Here, the second image processing algorithm may include a mean shift filter, an edge detection algorithm, an edge removal algorithm, a binarization algorithm, or any combination thereof.

In an embodiment, the second reference binary images may be images derived or modified from the first reference active material images. In an embodiment, the second reference binary images may be generated by applying a predetermined first image processing algorithm to the first reference binary images. Here, the first image processing algorithm may include rotation, tilt, shear, brightness adjustment, contrast adjustment, enlargement, reduction, or any combination thereof.

In an embodiment, the first reference binary images may be binary images of the first reference active material images, and the second reference binary images may be binary images of the second reference active material images. For example, the reference binary image 1451 may be a binary image of the reference active material image 1411, the reference binary image 1461 may be a binary image of the reference active material image 1421, and the reference binary image 1471 may be a binary image of the reference active material image 1431. Accordingly, the plurality of reference active material images 1411, 1421, and 1431 and the plurality of reference binary images 1451, 1461, and 1471 may be classified into image sets of corresponding images. For example, the reference active material image 1411 and the reference binary image 1451 may be classified into one image set.

In an embodiment, the training data may be used to train the artificial intelligence model 1345. In an embodiment, the training data may be used to train the artificial intelligence model 1345 for a predetermined number of epochs. Here, the predetermined number may be determined between 100 and 10000. For example, the predetermined number can be 1500.

**In** an embodiment, the training data may be divided into mini-batches of a predetermined batch size. Here, the batch size can be determined between 1 and 512. For example, the batch size may be 16. When the batch size is 4, each mini-batch may be composed of 16 image sets (i.e., 16 reference active material images and 16 reference binary images).

### Artificial intelligence model

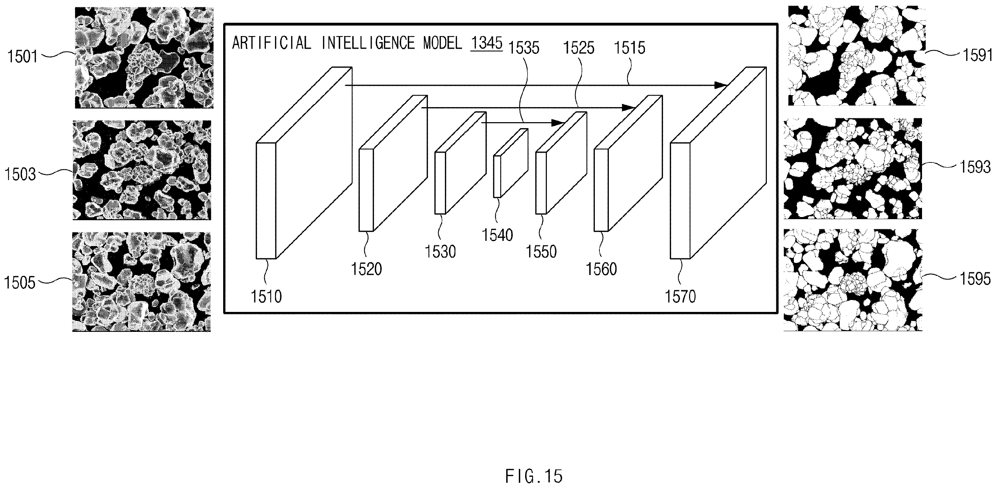

FIG. 15 illustrates an artificial intelligence model 1345 according to another embodiment of the present disclosure. Specifically, FIG. 15 shows an example of training the artificial intelligence model 1345 through a mini-batch consisting of reference active material images 1501, 1503, and 1505 and reference binary images 1591, 1593, and 1595.

In an embodiment, the artificial intelligence model 1345 may be a model based on convolutional neural network (CNN) or U-Net. In an embodiment, the artificial intelligence model 1345 may be a model trained to convert active material images into binary images.

With reference to FIG. 15, the artificial intelligence model 1345 may include a plurality of layers 1510, 1520, 1530, 1540, 1550, 1560, and 1570. The plurality of layers 1510, 1520, 1530, 1540, 1550, 1560, and 1570 may be connected sequentially. The input of a sequentially connected layer is the output of the layer before it, and the output of a sequentially connected layer can be the input of the layer after it. For example, the output of layer 1510 may be the input of layer 1520.

At least two layers (e.g., layers 1510 and 1570, layers 1520 and 1560 or layers 1530 and 1550) among the plurality of layers 1510, 1520, 1530, 1540, 1550, 1560, and 1570 may be connected through skip connections 1515, 1525, and 1535. **In an** embodiment, skip connections 1515, 1525, and 1535 may connect layers included in the encoding area (e.g., layers 1510, 1520, and 1530) with layers included in the decoding area (e.g., layers 1550, 1560, and 1570) among the plurality of layers 1510, 1520, 1530, 1540, 1550, 1560, and 1570. Here, the skip connections 1515, 1525, and 1535 may be interlayer connections for inputting the output of the layers 1510, 1520, and 1530 to the layers 1550, 1560, and 1570. For example, through the skip connection 1535, the layer 1550 may receive the output of the layer 1540 and the output of the layer 1530 as inputs.

**In** an embodiment, the plurality of layers 1510, 1520, 1530, 1540, 1550, 1560, and 1570 may include an input layer, a batch normalization layer, a 2D convolution layer, an activation layer, a max pooling layer, an up-sampling layer, a concatenate layer, or any combination thereof. In an embodiment, the layers included in the encoding area (e.g., layers 1510, 1520, and 1530) may have a structure in which a 2D convolution layer, a batch normalization layer, an activation layer, and a max pooling layer are sequentially connected. Similarly, the layers included in the decoding area (e.g., layers 1550, 1560, and 1570) may have a structure where a 2D convolution layer, a batch normalization layer, an activation layer, and an up-sampling layer are sequentially connected.

In an embodiment, the input layer may be a layer that receives the bit values contained in the reference active material images 1501, 1503, and 1505. In an embodiment, the input layer may acquire input consisting of bit values corresponding to the number of horizontal pixels × the number of vertical pixels × the number of channels (or depth). For example, when the reference active material image has a size of N × N, the input layer may receive N × N × 1 bit values. Here, N may be an integer between 32 and 4096 (e.g., 256). Depending on the embodiments, the number of channels may also be referred to as depth.

In an embodiment, the batch normalization layer may be a layer to normalize the output values of the previous layer on a batch basis. Depending on the embodiments, the batch normalization layer may be placed just before the activation layer. Here, a batch may include reference active material images input to the artificial intelligence model 1345 during one iteration to train the model. For example, when the batch size is 16, the number of reference active material images input to the artificial intelligence model 1345 during one iteration may be 16. Here, the batch size may be an integer between 1 and 512 (e.g., 16).

In an embodiment, the 2D convolution layer may be a layer performing a convolution operation on an input and a filter of a predetermined size to obtain output. In an embodiment, the 2D convolution layer included in the artificial intelligence model 1345 assumes that the output image size (number of horizontal pixels × number of vertical pixels) is the same as the input image size (number of horizontal pixels × number of vertical pixels). In an embodiment, the number of channels in the output may vary depending on the number of filters (or depth) in the 2D convolution layer. For example, when the number of filters is 2, the number of channels in the output may increase by twice compared to the number of channels in the input. In an embodiment, the number of channels in the output may vary depending on the stride in the depth direction of the 2D convolution layer. For example, when the stride in the depth direction is 2, the number of channels in the output may decrease by half compared to the number of channels in the input.

In an embodiment, the activation layer may be a layer applying a predetermined activation function to the input to obtain the output. For example, the predetermined activation function may include step, sigmoid, rectifier linear unit (ReLU), exponential linear unit (ELU), softmax, or any combination thereof.

In an embodiment, the max pooling layer may be a layer selecting the maximum value in each pooling region of the input to obtain the output. In an embodiment, the size of the pooling region in the max pooling layer may affect the image size of the output (i.e., the number of horizontal pixels and vertical pixels). For example, when the pooling region size is 2 × 2, the output image size (e.g., 128 × 128) may be reduced by half compared to the input image size (e.g., 256 × 256). Depending on the embodiments, the artificial intelligence model 1345 may include a pooling layer other than max pooling layer. For example, another type of pooling layer may include an average pooling layer.

In an embodiment, the up-sampling layer may be a layer used to increase the resolution of an image. In an embodiment, the up-sampling layer may be a layer increasing the image size of the output compared to the input using a predetermined interpolation algorithm.

In an embodiment, the concatenate layer may concatenate two or more inputs to produce the output. Here, concatenation may be a depth-wise connection. For example, when the first input is 128 × 128 × 128 and the second input is 128 × 128 × 128, the output of the concatenate layer may be 128 × 128 × 256. When the first input is 256 × 256 × 64 and the second input is 128 × 128 × 128, the output of the concatenate layer may be 256 × 256 × 128.

Although FIG. 15 depicts 7 layers 1510, 1520, 1530, 1540, 1550, 1560, and 1570 are 7, this is merely an illustrative example, and the number of layers is not limited to 7. For example, the number of layers included in the artificial intelligence model 1345 may be 32.

When the number of layers included in the artificial intelligence model 1345 is 32, the artificial intelligence model 1345 may have a structure in which the input layer, first batch normalization layer, first 2D convolutional layer, and second 2D convolutional layer are connected sequentially. The input of a sequentially connected layer is the output of the layer before it, and the output of a sequentially connected layer can be the input of the layer after it. Here, the input of the input layer may be 256 × 256 × 1, and the output may be 256 × 256 × 1. The output of the first batch normalization layer may be 256 × 256 × 1. The output of the first 2D convolution layer may be 256 × 256 × 64. The output of the second 2D convolution layer may be 256 × 256 × 64.

Following the second 2D convolution layer, the artificial intelligence model 1345 may have a structure in which the second batch normalization layer, the first activation layer, and the first max pooling layer are connected sequentially. Here, the output of the second batch normalization layer may be 256 × 256 × 64. The output of the first activation layer may be 256 × 256 × 64. The output of the first max pooling layer may be 128 × 128 × 64.

Following the first max pooling layer, the artificial intelligence model 1345 may have a structure in which the third 2D convolution layer, the fourth 2D convolution layer, the third batch normalization layer, the second activation layer, and the second max pooling layer are connected sequentially. Here, the output of the third 2D convolution layer may be 128 × 128 × 128. The output of the fourth 2D convolution layer may be 128 × 128 × 128. The output of the third batch normalization layer may be 128 × 128 × 128. The output of the second activation layer may be 128 × 128 × 128. The output of the second max pooling layer may be 64 × 64 × 128.

Following the second max pooling layer, the artificial intelligence model 1345 may have a structure in which the fifth 2D convolution layer, the sixth 2D convolution layer, the fourth batch normalization layer, the third activation layer, and the first up-sampling layer are connected sequentially. Here, the output of the fifth 2D convolution layer may be 64 × 64× 256. The output of the sixth 2D convolution layer may be 64 × 64 × 256. The output of the fourth batch normalization layer may be 64 × 64 × 256. The output of the third activation layer may be 64 × 64 × 256. The output of the first up-sampling layer may be 128 × 128 × 256.

Following the first up-sampling layer, the artificial intelligence model 1345 may have a structure in which the seventh 2D convolution layer, the first concatenation layer, the eighth 2D convolution layer, the ninth 2D convolution layer, the fifth batch normalization layer, the fourth activation layer, and the second up-sampling layer are connected sequentially. Of the two inputs to the first concatenation layer, the first input may be the output of the seventh 2D convolution layer, and the second input may be the output of the fourth 2D convolution layer. Here, the output of the seventh 2D convolution layer may be 128 × 128 × 128. The output of the first concatenate layer may be 128 × 128 × 256. The output of the eighth 2D convolution layer may be 128 × 128 × 128. The output of the ninth 2D convolution layer may be 128 × 128 × 128. The output of the fifth batch normalization layer may be 128 × 128 × 128. The output of the fourth activation layer may be 128 × 128 × 128. The output of the second up-sampling layer may be 256 × 256 × 128.

Following the second up-sampling layer, the artificial intelligence model 1345 may have a structure in which the tenth 2D convolution layer, the second concatenation layer, the eleventh 2D convolution layer, the twelfth 2D convolution layer, the sixth batch normalization layer, the fifth activation layer, the thirteenth 2D convolution layer, and the fourteenth 2D convolution layer are connected sequentially. Of the two inputs to the second concatenate layer, the first input may be the output of the tenth 2D convolution layer, and the second input may be the output of the second 2D convolution layer. Here, the output of the tenth 2D convolution layer may be 128 × 128 × 64. The output of the second concatenate layer may be 256 × 256 × 128. The output of the eleventh 2D convolution layer may be 256 × 256 × 64. The output of the twelfth 2D convolution layer may be 256 × 256 × 64. The output of the sixth batch normalization layer may be 256 × 256 × 64. The output of the fifth activation layer may be 256 × 256 × 64. The output of the thirteenth 2D convolution layer may be 256 × 256 × 2. The output of the fourteenth 2D convolution layer may be 256 × 256 × 2.

### Artificial Intelligence Model Learning

A description is made of the operation of the artificial intelligence model training unit 1341 for training the artificial intelligence model 1345 through the images 1501, 1503, 1505, 1591, 1593, and 1595 included in a mini-batch, with reference to FIG. 15.

In an embodiment, the artificial intelligence model training unit 1341 may sequentially input reference active material images 1501, 1503, and 1505 to the artificial intelligence model 1345.

In an embodiment, the artificial intelligence model training unit 1341 may train the artificial intelligence model 1345 to ensure that the difference between sequentially acquired output images of the artificial intelligence model 1345 and reference binary images 1591, 1593, and 1595 is equal to or less than a predetermined threshold.

For example, the artificial intelligence model training unit 1341 may compute the difference between output images and reference binary images 1591, 1593, and 1595 based on a loss function (or cost function). Here, the loss function may include the mean absolute error function, the root mean square error, the mean squared error function, or the binary cross-entropy loss function. Depending on the embodiments, the binary cross-entropy loss function may be a function with weights between 1 and 1000 applied to one color (e.g., white out of black and white) among two colors (or classes).

Subsequently, the artificial intelligence model training unit 1341 may adjust the weights of the artificial intelligence model 1345 to ensure that the difference is equal to or less than the predetermined threshold (or to reach a minimum value). **In** an embodiment, the artificial intelligence model training unit 1341 may adjust the weights of the artificial intelligence model 1345 to ensure that the difference is equal to or less than a predetermined threshold (or to reach a minimum value) using an algorithm based on gradient descent (e.g., Adam, SGD, and Momentum). Here, the adjusted weights may be determined based on the learning rate. The learning rate may be determined within the range of 0.00000001 to 0.1. For example, the learning rate may be 0.00001.

Sequentially, the artificial intelligence model training unit 1341 may train the artificial intelligence model 1345 with images included in the next mini-batch. After using all the images included in the mini-batches to train the artificial intelligence model 1345, the artificial intelligence model training unit 1341 may retrain the artificial intelligence model 1345 with images included in the mini-batches based on a predetermined number of epochs.

### Image processing through artificial intelligence models

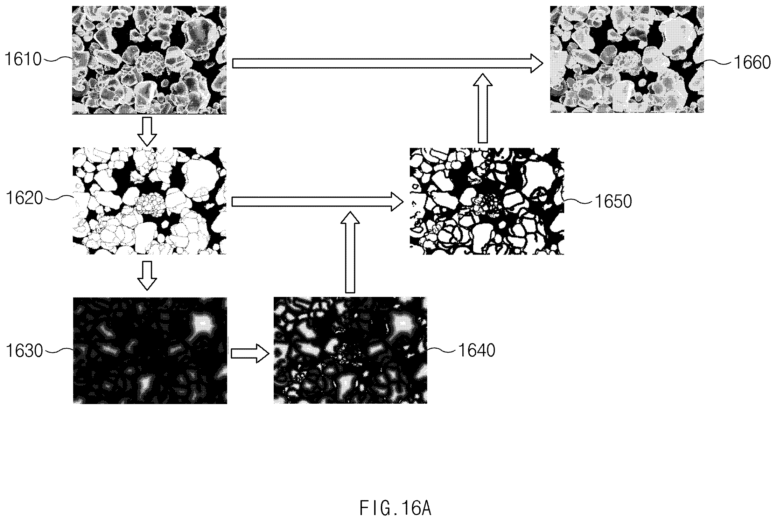

FIG. 16A illustrates images 610, 1620, 1630, 1640, 1650, and 1660 resulting from image processing of the image processing apparatus 1301 according to an embodiment of the present disclosure.

In an embodiment, the image acquisition unit 1350 may acquire an active material image 1610 of active materials. In an embodiment, the image acquisition unit 1350 may acquire an active material image 1610 through the image acquisition device 1303.

In an embodiment, the image generation unit 1360 may generate a binary image 1620. In an embodiment, the image generation unit 1360 may generate a binary image 1620 by inputting the active material image 1610 into the artificial intelligence model 1345.

In an embodiment, the distance transformation unit 1361 may transform the binary image 1620 into the distance transformation image 1640 based on a distance transformation algorithm.

In an embodiment, the distance transformation unit 1361 may generate a distance transformation image 1640 by calculating the distance from each pixel to the nearest black pixel (or edge pixel) in the binary image 1620 and normalizing the calculated distances for each pixel. Here, the image 1630 may represent the distance from each pixel to the nearest black pixel (or edge pixel) in the binary image 1620. Therefore, the values of the pixels included in image 1630 may be the unnormalized distance values, and the values of the pixels included in the distance transformation image 1640 may be the normalized distance values. Depending on the embodiments, the distance between pixels may be calculated based on the L1 distance and the L2 distance.

In an embodiment, the distance transformation unit 1361 may generate the distance transformation image 1640 by identifying the maximum distance among the distances calculated for each pixel included in the binary image 1620 and perform max-min normalization on the distances calculated for each pixel based on the maximum distance. Depending on the embodiments, the distance transformation unit 1361 may generate the distance transformation image 1640 based on Z-score normalization, L1 normalization, or L2 normalization, rather than the max-min normalization.

In an embodiment, the binary image filtering unit 1365 may filter the binary image 1620 using a threshold set based on the distance transformation image 1640. Here, the threshold may be a value obtained by multiplying a predetermined ratio to the normalized maximum distance of the distance transformation image 1640. For example, the predetermined ratio may be a value between 0 to 0.1.

In an embodiment, the binary image filtering unit 1365 may filter the binary image 1620 based on the distance transformation image 1640 to generate a filtered-binary image 1650.

In an embodiment, the binary image filtering unit 1365 may filter the binary image 1620 by selecting pixels with distance values equal to or less than a predetermined threshold in the distance transformation image 1640 and setting the color values of pixels, among the pixels included in the binary image 1620, corresponding to the pixels selected in the distance transformation image 1640 to a predetermined color value (i.e., a color value corresponding to black).

In an embodiment, the object identification unit 1370 may identify a plurality of objects included in the filtered binary image 1650. Here, the plurality of objects included in the filtered binary image 1650 may correspond to the active materials in the active material image 1610. In an embodiment, the plurality of objects may be composed of regions with a predetermined value (e.g., value representing white color). In an embodiment, the plurality of objects may be distinguished by regions with different predetermined values (e.g., value representing black color).

In an embodiment, the image segmentation unit 1380 may acquire the segmentation image 1660 by segmenting the plurality of active material objects included in the active material image 1610 based on the plurality of objects. In an embodiment, the image segmentation unit 1380 may segment the plurality of active materials in the active material image 1610 based on the watershed algorithm. Here, the plurality of active materials included in the active material image 1610 may correspond to the plurality of active material objects included in the segmentation image 1660, respectively.

In an embodiment, the information extraction unit 1390 may extract information about the active material based on the active material objects included in the segmentation image. In an embodiment, the information about the active materials may include information about the average diameter, average perimeter length, average sphericity, average aspect ratio, average convexity, average solidity, or distribution values of these properties. Additionally, the information about the active materials may include information about individual properties such as diameter, perimeter length, sphericity, aspect ratio, convexity, and/or solidity for each active material. In addition, the information about the active materials 1611, 1613, and 1615 may include information about percentile values (e.g., 1 to 99%, or D5, D50, D95, etc.) for each active material.

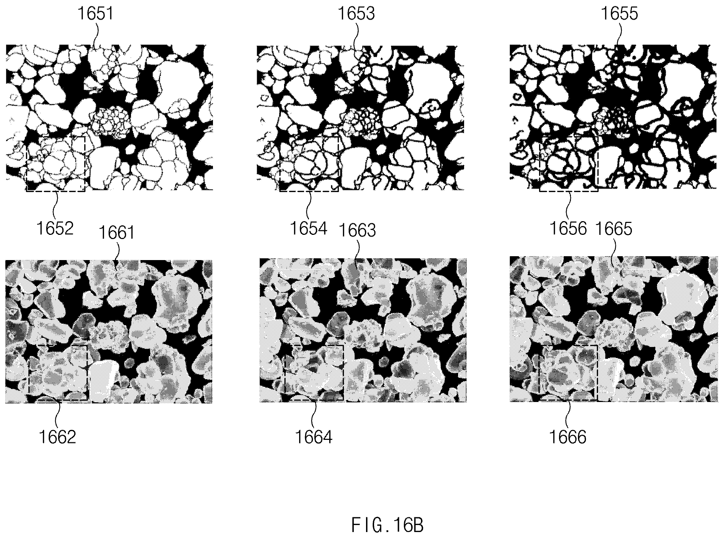

FIG. 16B illustrates differences in images resulting from image processing of an image processing apparatus 1301 according to another embodiment of the present disclosure.

With reference to FIG. 16B, the three filtered binary images (651, 1653, and 1655 are images generated by applying different thresholds to the binary image. For example, the filtered binary image 1651 may be filtered with a threshold set to a value obtained by multiplying the normalized maximum distance by 0, the filtered binary image 1653 may be filtered with a threshold set to a value obtained by multiplying the normalized maximum distance by 0.05, and the filtered binary image 1655 may be filtered with a threshold set to a value obtained by multiplying the normalized maximum distance by 0.1.

By referring to the regions 1652, 1654, and 1656 of the filtered binary images 1651, 1653, and 1655 and the regions 1662, 1664, and 1666 of the segmentation images 1661, 1662, and 1664 , it can be shown that even though the threshold is increased, the loss of small particles is prevented, and the separation between adjacent particles becomes clearer.

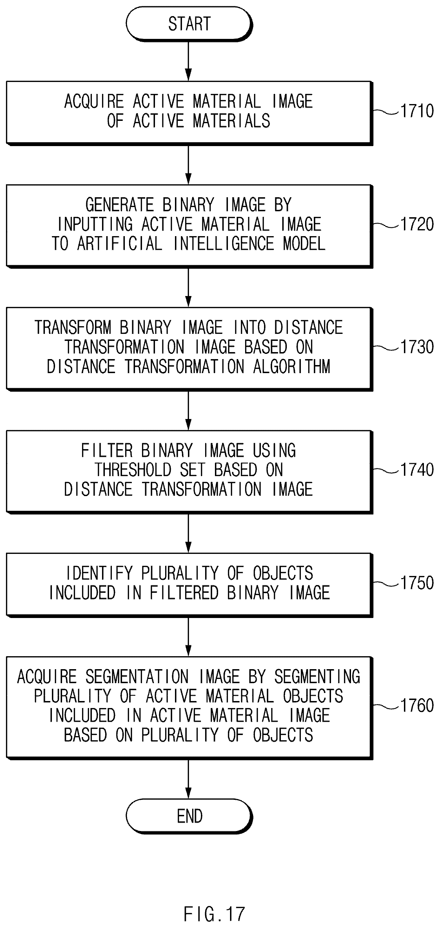

FIG. 17 is a flowchart illustrating an active material image processing method of an image processing apparatus 1301 according to another embodiment of the present disclosure.

With reference to FIG. 17, the image processing apparatus 1301 may acquire an active material image 1610 of the active materials in operation 1710. In an embodiment, the image acquisition apparatus 1301 may acquire the active material image 1610 through the image acquisition device 1303.

In operation 1720, the image processing apparatus 1301 may generate a binary image 1620 by inputting the active material image 1610 to the artificial intelligence model 1345. Here, the artificial intelligence model 1345 may be a model trained by the artificial intelligence model training method illustrated in FIG. 6.

In operation 1730, the image processing apparatus 1301 may transform the binary image 1620 into a distance transformation image 1640 based on a distance transformation algorithm.

In an embodiment, the image processing apparatus 1301 may generate a distance transformation image 1640 by calculating the distance from each pixel to the nearest black pixel (or edge pixel) in the binary image 1620 and normalizing the calculated distances for each pixel. Here, the image 1630 may represent the distance from each pixel to the nearest black pixel (or edge pixel) in the binary image 1620. Therefore, the values of the pixels included in image 1630 may be the unnormalized distance values, and the values of the pixels included in the distance transformation image 1640 may be the normalized distance values. Depending on the embodiments, the distance between pixels may be calculated based on the L1 distance and the L2 distance.

In an embodiment, the image processing apparatus 1301 may generate the distance transformation image 1640 by identifying the maximum distance among the distances calculated for each pixel included in the binary image 1620 and perform max-min normalization on the distances calculated for each pixel based on the maximum distance. Depending on the embodiments, the distance transformation unit 1361 may generate the distance transformation image 1640 based on Z-score normalization, L1 normalization, or L2 normalization, rather than the max-min normalization.

In operation 1740, the image processing apparatus 1301 may filter the binary image 1620 using a threshold set based on the distance transformation image 1640. Here, the threshold may be a value obtained by multiplying a predetermined ratio to the normalized maximum distance of the distance transformation image 1640. For example, the predetermined ratio may be a value between 0 to 0.1.

In an embodiment, the image processing apparatus 1301 may generate a filtered binary image 1650 by filtering the binary image based on the distance transformation image 1640.

In an embodiment, the image processing apparatus 1301 may filter the binary image 1620 by selecting pixels with distance values equal to or less than a predetermined threshold in the distance transformation image 1640 and setting the color values of pixels, among the pixels included in the binary image 1620, corresponding to the pixels selected in the distance transformation image 1640 to a predetermined color value (i.e., a color value corresponding to black).

In operation 1750, the image processing apparatus 1301 may identify a plurality of objects included in the filtered binary image 1650.

In operation 1760, the image processing apparatus 1301 may acquire a segmentation image 1660 by segmenting the plurality of active materials included in the active material image 1610 based on the plurality of objects. In an embodiment, the image processing apparatus 1301 may segment the plurality of active materials included in the active material image 1610 based on the watershed algorithm. Here, the plurality of active materials included in the active material image 1610 may correspond to the plurality of active material objects included in the segmentation image 1660, respectively.

Although the image processing apparatus 1301 is exemplified as performing an image processing method based on an active material image in this disclosure, this is merely an illustrative example. Depending on the embodiments, the image processing apparatus 1301 may separate and/or analyze particles not only in active material images but also in precursor images by performing the same image processing. **In** an embodiment, the image acquisition device 1303 may acquire an image of active materials and/or precursors.

**In** addition, although it is exemplified that the active material image is a SEM image in this disclosure, this is only an illustrative example. Depending on the embodiments, the active material images may be replaced with images based on transmission electron microscope (TEM), optical microscope (OM), structured illumination microscopy (SIM), or focused ion beam (FIB).

The above-described image processing apparatus 1301 and image processing method is capable of automatic quantitative analysis of the shape characteristics of a large number of positive electrode active material particles by acquiring an active material image 1610 of a plurality of active materials, generating a binary image 1620 by inputting the material image 1610 to an artificial intelligence model 1345, transforming the binary image 1620 to a distance transformation image 1640 based on a distance transformation algorithm, filtering the binary image 1620 using a threshold set based on the distance transformation image 1640, identifying a plurality of objects included in the filtered binary image 1650, and segmenting the plurality of active material objects included in the active material image based on the plurality of object.

**In** addition, the above-described image processing apparatus 1301 and image processing method is capable of mitigating the problem of measurement variations depending on the user by utilizing an artificial intelligence model 1345 that minimizes the need for user input.

Meanwhile, although the description has provided with an illustrative example of a positive electrode active material image, the technical principles disclosed in this document can be applied in a substantially similar manner even when the active material image is a negative electrode active material image.

## Claims

1. An image processing apparatus comprising:
an image acquisition unit configured to acquire an active material image of a plurality of active materials;
an artificial intelligence model training unit configured to train an artificial intelligence model using training data comprising a plurality of reference active material images and a plurality of reference binary images or a plurality of reference edge images corresponding to the plurality of reference active material images;
an image generation unit configured to generate a binary image or an edge image by inputting the active material image to the artificial intelligence model;
an object identification unit configured to identify a plurality of objects based on the binary image or the edge image; and
an image segmentation unit configured to acquire a segmentation image by segmenting the plurality of active materials included in the active material image based on the plurality of objects.

2. The image processing apparatus of claim 1, wherein the artificial intelligence model training unit trains the artificial intelligence model to ensure the difference between a plurality of output images acquired by inputting the plurality of reference active material images to the artificial intelligence model and the plurality of reference binary images is equal to or less than a predetermined reference value.

3. The image processing apparatus of claim 2, wherein the plurality of reference active material images comprise one or more first reference active material images and one or more second reference active material images, the plurality of reference binary images comprise one or more first reference binary images and one or more second reference binary images, the first reference active material images being acquired by capturing images of active material powder, the second reference active material images being generated by applying a predetermined image processing algorithm to the first reference active material images, the first reference binary images corresponding to the first reference active material images, and the second reference binary images corresponding to the second reference active material images.

4. The image processing apparatus of claim 1, wherein the artificial intelligence model comprises a plurality of layers of which at least one layer included in an encoding area and at least one layer included in a decoding area are connected through a skip connection.

5. The image processing apparatus of claim 4, wherein the layers included in the decoding area among the plurality of layers have a structure in which a 2-dimensional (2D) convolution layer, a batch normalization layer, an activation layer, and an up-sampling layer are sequentially connected.

6. The image processing apparatus of claim 4, wherein the layers included in the encoding area among the plurality of layers have a structure in which a 2-dimensional (2D) convolution layer, a batch normalization layer, an activation layer, and a max pooling layer are sequentially connected.

7. The image processing apparatus of claim 1, wherein the active material image is an image based on scanning electron microscope (SEM), transmission electron microscope (TEM), optical microscope (OM), structured illumination microscopy (SIM), or focused ion beam (FIB).

8. The image processing apparatus of claim 1, wherein the image segmentation unit segments the plurality of active materials included in the active material image based on a watershed algorithm.

9. The image processing apparatus of claim 1, further comprising an information extraction unit configured to extract information on the plurality of active materials based on the segmentation image,
wherein the information on the plurality of active materials comprises particle diameter, perimeter length, sphericity, aspect ratio, convexity, solidity, distribution, percentile value of the active materials, or any combination thereof.

10. The image processing apparatus of claim 1, further comprising an edge removal unit configured to generating an edge-removed image by removing edges in the active material image based on the edge image, wherein the object identification unit identifies the plurality of objects included in the edge-removed image.

11. The image processing apparatus of claim 1, wherein the artificial intelligence model training unit trains the artificial intelligence model to ensure the difference between a plurality of output images acquired by inputting the plurality of reference active material images to the artificial intelligence model and the plurality of reference edge images is equal to or less than a predetermined reference value.

12. The image processing apparatus of claim 11, wherein the artificial intelligence model training unit calculates the difference between the plurality of output images and the plurality of reference edge images based on the mean absolute error function, root mean square error, mean squared error function, or binary cross-entropy loss function.

13. The image processing apparatus of claim 12, wherein the binary cross-entropy loss function is assigned a weight for a predetermined color.

14. The image processing apparatus of claim 1, further comprising:
a distance transformation unit configured to transform the binary image into a distance transformation image based on a distance transformation algorithm; and
a binary image filtering unit configured to filter the binary image using a threshold set based on the distance transformation image,
wherein the object identification unit identifies the plurality objects included in the filtered binary image.

15. The image processing apparatus of claim 14, wherein the distance transformation unit generates the distance transformation image by calculating the distance from each included to the nearest black pixel in the binary image and normalize the calculated distance for each pixel.

16. The image processing apparatus of claim 15, wherein the distance transformation unit generates the distance transformation image by identifying the maximum distance among the distances calculated for each pixel included in the binary image and performing max-min normalization on the distances calculated for each pixel based on the maximum distance.

17. The image processing apparatus of claim 14, wherein the binary image filtering unit filters the binary image by selecting pixels with distance values equal to or less than a predetermined threshold among the pixels included in the distance transformation image and setting the color values of the pixels corresponding to the selected pixels among the pixels included in the binary image to a predetermined color value.

18. The image processing apparatus of claim 17, wherein the predetermined threshold is a value obtained by multiplying a predetermined ratio to the normalized maximum distance of the distance transformation image.
